# EUROPEAN PATENT SPECIFICATION

(11) **EP 2 409 138 B1**
(45) Date of publication and mention of the grant of the patent: **02.08.2017**
(21) Application number: 10711839.0
(22) Date of filing: 16.03.2010
(51) Int. Cl.: G01N 21/64, G01N 21/27

(54) **FLUORESCENCE-BASED ASSAYS ON MICROFLUIDIC DEVICES**
FLUORESZENZNACHWEISTESTS AUF MIKROFLUIDISCHEN VORRICHTUNGEN
DOSAGES DÉTECTÉS PAR FLUORESCENCE SUR DES DISPOSITIFS MICROFLUIDIQUES

(30) Priority: 16.03.2009 US 160506 P; 17.07.2009 US 226360 P
(43) Date of publication of application: 25.01.2012
(73) Proprietor: Clondiag GmbH, 07749 Jena (DE)
(72) Inventor: ERMANTRAUT, Eugen, 07745 Jena (DE); KAISER, Thomas, 99441 Hohlstedt (DE); TUCHSCHEERER, Jens, 07743 Jena (DE); BEIER, Vico, 07743 Jena (DE); SCHULZ, Torsten, 07749 Jena (DE); WOESTEMEYER, Anke, 07743 Jena (DE)
(74) Representative: Huenges, Martin
(86) International application number: PCT/EP2010/001650
(87) International publication number: WO 2010/105802

(56) References cited:
- EP-A2- 1 132 485
- WO-A1-01/35074
- WO-A2-2008/092075
- WO-A2-2008/135564

## Description

### FIELD OF THE INVENTION

The present invention relates to assays (e.g., assays using fluorescently labeled particles immobilized in microfluidic channels).

### BACKGROUND

Assays can be performed to determine the presence of one or more analytes in a sample. Arrays can be used to perform multiple assays (e.g., for each of multiple different analytes) on a sample. Typical arrays include a substrate having multiple spaced apart test zones each having a different probe compound such as a polynucleotide, antibody, or protein. In use, the array is contacted with a sample, which then interacts with the sites of the array. For each site, the interaction can include, for example, binding of a corresponding analyte to probe compounds of the site and/or a chemical reaction between the corresponding analyte and the probe compounds. The reaction results in a detectable product (e.g., a precipitate). The presence and extent of interaction depends upon whether a corresponding analyte is present in the sample.

Typically, the interaction is detected optically (e.g., by fluorescence). For example, optical detection can be performed using an imaging detector (e.g., a CCD) having multiple light sensitive elements (e.g., pixels) spaced apart from one another in at least one (e.g., two) dimensions. Each of the light sensitive elements is positioned to receive light from a different spatial location of the substrate. Thus, light simultaneously detected by multiple light sensitive elements can be combined to form image data in at least one (e.g., two) dimensions of the substrate. The image data can be evaluated to determine the presence and/or extent of interaction at multiple sites of the array.

WO 2008/135564 describes a device for detecting an analyte, comprising a cartridge having a micro fluidic channel including an inlet and a detection region in fluid communication with the inlet; a microfluidic flow path having an at least partially deformable wall and in fluid communication with the detection region of the channel; and a cap having a sealing member configured to seal with the inlet and form a fluid circuit including the inlet, the microfluidic channel and the microfluidic flow path.

### SUMMARY

The present invention relates to assays (e.g., assays using fluorescently labeled particles immobilized in microfluidic channels).

In one aspect a method comprises:
labeling particles immobilized in the microfluidic channel of a device or system with a fluorescent label; wherein said particle is a eukaryotic cell, a bacterium, a virus, a virus-like particle or a bead showing an antigen;
obtaining a first image comprising at least a subset of the immobilized particles labeled with the fluorescent label;
determining a first value indicative for the number of particles in the first image;
obtaining a further image of the subset of immobilized particles labeled with the fluorescent label after an interim;
determining a further value indicative for the number of particles in the further image; and
determining a third value indicative for the activity and/or quality of the fluorescent label and/or the quality of an interaction between a particle and a fluorescent label and/or the usability of the device or system and/or of any procedure, function or method carried out with or in said device or system and/or the accuracy of a test result obtained by using said device or system, based on a comparison of the first value and the further value;
wherein an increase of the further value with respect to the first value of at least 10% leads to the test results being considered as usable,
wherein an increase of the further value with respect to the first value of less than 10% leads to a disregard of the test results.

In one embodiment, the method comprises repeating the steps of obtaining a further image and determining a further value at least 2, 3, 5, 10 or n times and determining one or more third values based on a comparison of the first and one or more of the further values.

In a further embodiment, the increase of the further value with respect to the first value of at least 20% leads to the test results being considered as usable and wherein an increase of the further value with respect to the first value of less than 20% leads to a disregard of the test results.

In a further embodiment, the increase of the further value with respect to the first value of at least 30% leads to the test results being considered as usable and wherein an increase of the further value with respect to the first value of less than 30% leads to a disregard of the test results.

In a further embodiment, the eukaryotic cell is a T helper cell.

In a further embodiment, said fluorescent label is a dye, a ligand or an antibody that is fluorescent or conjugated to a fluorescent material.

In a further embodiment, said interim between a first and a further image is from 10 sec to 30 min, from 1 min to 15 min, from 5 min to 10 min, or 7 min.

In a further embodiment, the method further comprises:
introducing a liquid sample into a microfluidic channel disposed within a microfluidic network, device or system, wherein the microfluidic channel comprises the liquid sample comprising multiple particles, and wherein said microfluidic channel comprises and/or is associated with a control element;
forming a mixture comprising at least a portion of the liquid sample and a fluorescent label;
forming multiple complexes, each complex comprising one of the multiple particles and at least one of the fluorescent labels;
detecting complexes present within a subset of the mixture.

In a further embodiment, the step of detecting complexes allows a detection and/or diagnosis and/or conclusion on the status of a retroviral infection.

In a further embodiment, said retroviral infection is an infection with HIV.

In a further embodiment, labeling comprises:
contacting the particles immobilized within the microfluidic channel with the fluorescent label configured to bind the particles;
forming complexes, each of the complexes comprising the fluorescent label and a particle immobilized within the microfluidic channel.

### BRIEF DESCRIPTION OF THE DRAWINGS

FIG. 1 illustrates a microfluidic device.
FIG. 2 is a side view of the microfluidic device of Fig. 1.
FIG. 3a shows top views of two test zones of the microfluidic device of Fig. 1.
FIGS. 3b to 3g illustrate a method for forming the test zone of Fig. 3a.
FIGS. 4 and 5 are side views of a system configured to operate the microfluidic device of FIG. 1;
FIG. 5 is only a partial side view.
FIG. 6 illustrates fluorescence intensity data as a function of position along a channel of the microfluidic device of Fig. 1.
FIG. 7 illustrates a microfluidic device.
FIGS. 8a and 8b are each top views of two test zones of the microfluidic device of Fig. 7.
FIG. 9 illustrates a microfluidic device.
FIG. 10a is a cross-sectional side view of the microfluidic device of Fig. 9 and also illustrates a capillary tube containing liquid sample material.
FIG. 10b illustrates the microfluidic device of Fig. 10a with the capillary tube having been connected with an inlet of the microfluidic device, the liquid sample not having entered a microfluidic network of the microfluidic device.
FIG. 10c illustrates the microfluidic device of Fig. 10c with a portion of the liquid sample having been drawn from the sample capillary into the microfluidic network of the microfluidic device.
FIG. 10d illustrates the microfluidic device of Fig. 10c with the step of drawing the liquid sample from the sample capillary into the microfluidic network of the microfluidic device having been completed.
FIG. 10e illustrates the microfluidic device of Fig. 10d with a portion of the liquid sample being moved a distance Δl along a length of the microfluidic network.
FIG. 10f illustrates the microfluidic device of Fig. 10e and detection of an analyte present within a portion of the liquid sample.
FIG. 11 illustrates an operating system for operating the microfluidic device of any of FIGS. 1,7, and 9. The operating system can include any or all of the features of the operating system of Figs. 4 and 5.
FIGS. 12A-12D show a schematic depiction of a fluid circuit.
FIGS. 13A-13B show cutaway views of a cartridge having a fluid circuit.
FIGS. 14A-14B show cutaway views of a fluorescence detector.
FIG. 15 shows a scheme of optical path of a detector.
FIGS. 16A-16B show depictions of a cell counting assay using a fluorescence detector.
FIG. 17 shows an overlay of two images derived from a cell counting assay using a fluorescence detector.
FIGS. 18A-18C illustrate a matrix included in a capillary (A) and the step of at least partially dissolving the matrix after contacting the matrix with a drop of liquid (B and C).
FIG. 19 illustrates the filling of a cell counting device (steps 1 to 7). Exemplary control elements comprised in the microfluidic channel are depicted as open circles.
FIGS. 20 and 21 show exemplary devices having a microfluidic channel with a ventilation opening in an open (FIG. 20) and a closed (FIG. 21) state.
FIGS. 22 to 24 show further exemplary devices having a microfluidic channel with a ventilation opening. FIG. 22 shows the ventilation opening in an open state and FIG. 23 in a closed state. FIG. 24 is a top view on a first end of a capillary inlet.

### DETAILED DESCRIPTION

A method for assaying a sample to determine the presence (e.g., qualitatively and/or quantitatively) of multiple analytes includes introducing the sample into a channel of a microfluidic device. The microfluidic device can have a single channel or multiple channels, depending on the design and complexity of the assay. The channel can be defined between opposed inner surfaces of first and second substrates of the device.

In general, a device for performing assays can include a microfluidic flow path that is bounded by at least one deformable surface. For example, where the microfluidic flow path is defined be between opposed inner surfaces of first and second substrates of the device the second substrate can be relatively flexible compared to the first substrate. In another example, a portion of the micro fluidic flow path can include a compressible zone. The compressible zone can be a length of the fluid circuit along which at least one wall of the circuit is compressible or deformable. When a localized compressive force is applied to the deformable surface, the surface deforms. Under a sufficient force, the deformable surface can be compressed to a degree that interrupts the microfluidic flow path. Moving the location of the surface deformation relative to the microfluidic flow path can move liquid within the microfluidic flow path, particularly when the deformable surface is compressed to a degree that interrupts the microfluidic flow path.

The second substrate can be relatively flexible compared to the first substrate. Multiple test zones can be spaced apart along the channel. Each test zone includes an immobilized probe compound configured to participate in an assay for a respective analyte. Typically, each assay includes interaction of a probe compound with the respective analyte or with a respective complex including the analyte and a reagent (e.g., an optical label).

To determine the assay result for each test zone, the outer surface of the second substrate can be subjected to a localized compressive force. The compressive force causes a localized reduction of the distance separating the inner surfaces of the first and second substrates. The location of the localized distance reduction overlaps an optical detection zone defined within the channel. As the distance is reduced, mobile material (e.g., sample, unbound optical probes, and/or reagents) is displaced from between the substrates at the detection zone. The microfluidic device is translated so that the test zones pass sequentially through the detection zone. For each test zone, the assay result is optically determined (e.g., by fluorescence) as the test zone passes through the detection zone. The presence of each analyte is determined (e.g., quantitatively and/or qualitatively) based on the assay result.

The assay results can typically determined without first contacting the test zones with a wash solution after contacting the test zones with the sample.

The analytes to be determined can be selected as desired. For example, the analytes can relate to medicine (e.g., diagnostics), research (e.g., drug discovery), industry (e.g. water or food quality monitoring), or forensics. Exemplary analytes to be determined include markers (e.g., diagnostic markers or predictive markers) of physiological conditions such as disease. Such markers include cardiac markers (e.g., natriuretic peptides and members of the troponin family), cancer markers (e.g., nuclear matrix proteins), genetic markers (e.g., polynucleotides), sepsis markers, neurological markers, and markers indicative of pathogenic conditions. The analytes can be indicative of the presence of pathogens (e.g., bacteria, viruses, or fungi).

The probe compounds of the test zones can be selected as desired based on the analytes to be determined. Exemplary probe compounds include polynucleotides, antibodies, and proteins.

The sample liquid can be selected as desired based on the analytes to be determined. Exemplary samples include water, aqueous solutions, organic solutions, inorganic solutions, bodily fluids of humans and other animals, for example, urine, sputum, saliva, cerebrospinal fluid, whole blood and blood-derived materials such as plasma and sera.

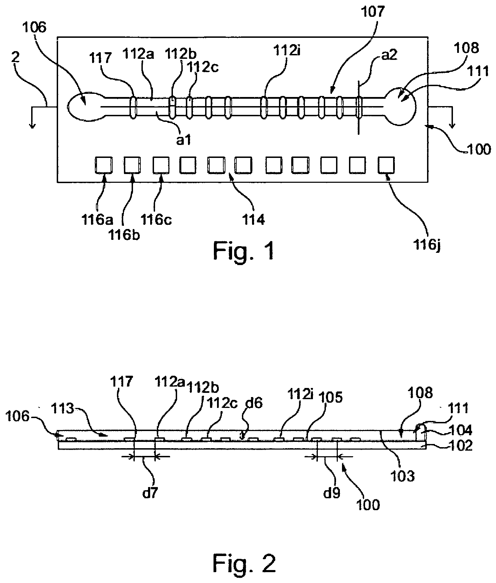

Referring to Figs. 1, 2, and 4 a micro fluidic device 100 and an operating system 500 can be used to assay a sample to determine the presence (e.g., qualitatively and/or quantitatively) of multiple analytes. Microfluidic device 100 includes first and second substrates 102,104 defining a microfluidic network 107 including an inlet 106 and, in communication therewith, a channel 110 and a reservoir 108. Multiple spaced apart test zones 112i are disposed within channel 110. Each test zone 112i includes one or more reagents (e.g., probe compounds) configured to participate in an assay for an analyte. Channel 110 also includes a reference zone 117. Device 100 also includes a reference pattern 114 including multiple indicia 116j. Reference pattern 114 provides information related to spatial properties of test zones 112i.

Operating system 500 includes a housing 502, a detector 504, a reference pattern reader 506, and a processor in communication with detector 504 and pattern reader 508. Detector 504 is an optical fluorescence detector that detects interaction between a sample and test zones 112i. Detector 504 includes a light source 550 (e.g., a light emitting diode or a laser diode) and a zero^{th} order light sensitive detector 552 (e.g., a photomultiplier tube or a photodiode, such as an avalanche photodiode). Reference pattern reader 506 reads reference pattern 114 of device 100 during operation of system 500.

We now discuss microfluidic device 100 and system 500 in greater detail.

First substrate 102 is typically optically transmissive (e.g., clear) with respect to a wavelength of light useful for exciting and detecting fluorescence from fluorescent labels. For example, first substrate 102 may transmit at least about 75% (e.g., at least about 85%, at least about 90%) of incident light in a least one wavelength range between about 350 nm and about 800 nm. First substrate 102 can be formed of, for example, a polymer, glass, or silica. Second substrate 104 is typically formed of a pliable or flexible material (e.g., an elastomeric polymer). First substrate 102 may be less flexible than second substrate 104. For example, first substrate 102 may be substantially rigid (e.g., sufficiently rigid to facilitate handling of device 100).

Channel 110 is a capillary channel. A sample 113 applied to inlet 106 migrates along channel 110 by capillary force. Channel 110 is oriented along a major axis a1. Reservoir 108 includes a vent 111 to prevent gas buildup ahead of the sample.

Each test zone 112i typically includes a reagent (e.g., a probe compound) configured to provide a detectable interaction in the presence of an analyte. The interaction can include, for example, binding of a corresponding analyte to a probe compound of the test site and/or a chemical reaction between the corresponding analyte and the probe compound. The reaction results in a detectable product (e.g., a precipitate). Exemplary probe compounds include proteins, antibodies, and polynucleotides. Suitable probe compounds for determining the presence of an analyte are described in U.S. provisional application 60/826,678 filed 22 September 2006.

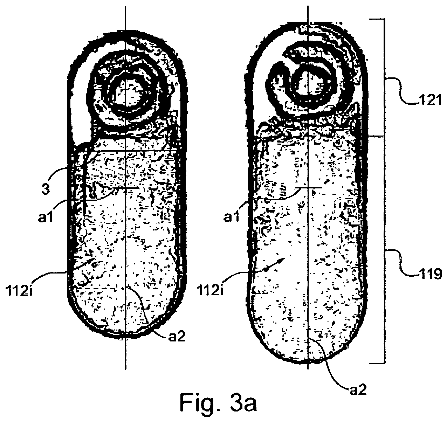

Referring also to Fig. 3a, each test zone 112i is elongate having a major axis a2 oriented generally perpendicular to major axis a1 of channel 110. Typically, a ratio of a length along major axis a2 to a width w along a perpendicular dimension of the test zones 112 is at least 2.5 (e.g., at least 5). The length along axis a2 is typically at least about 200 µm (e.g., at least about 350 microns) and typically about 2000 µm or less (e.g., about 1000 µm or less, about 750 µm or less). Width w is typically at least about 25 µm (e.g., at least about 50 microns) and typically about 500 µm or less (e.g., about 250 µm or less, about 150 µm or less). Test zones 112 may be about 500 µm long and about 100 µm wide.

As seen in Fig. 2, test zones 112i are spaced apart from adjacent test zones by a distance d7 along channel 110. Distance d7 between test zones 112i is discussed further below in relation to a detection zone of detector 504.

Test zones 112i can be formed as desired. In general, the reagents are contacted with the first substrate. Then, the reagents and substrate are relatively translated laterally to form an elongated test zone.

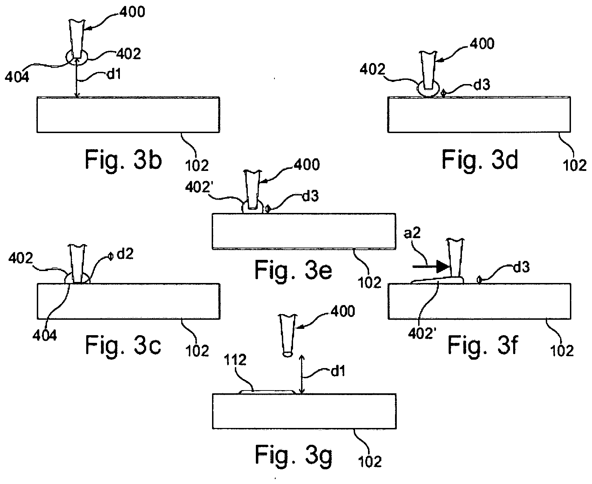

Referring to Figs. 3b-3g, a method for forming test zones 112i includes dispensing reagents from a capillary spotter 400 onto first substrate 102. In Fig. 3b, an amount (e.g., between about 2 and 8 nl, between about 3 and 5 nl) of reagent solution 402 containing one or more probe compounds is introduced to a distal tip 404 of a capillary of a capillary spotter. Distal tip 404 typically has a diameter of between about 80 and 120 µm (e.g., about 100 µm). Reagent solution 402 and substrate 102 are initially separated (e.g., not in contact) by a distance d1. Typically, d1 is at least about 250 µm (e.g., about 500 µm).

In Fig. 3c, tip 404 and substrate 102 are brought to a smaller separation d2 so that reagent solution 402 contacts a location of substrate 102. At the smaller separation d2, distal tip 404 is adjacent the location of substrate 102 (e.g., touching so that d2 is zero). Distal tip 404 and substrate 102 are maintained for a time (e.g., about 1 second or less, about 0.5 seconds or less, about 0.25 second or less) at separation d2 in the adjacent (e.g., touching) position. The time for which distal tip 402 is maintained in the adjacent (e.g., touching) position may be indistinguishable from zero.

In Fig. 3d, distal tip 404 and substrate 102 are moved to an intermediate separation d3 in which distal tip 404 and substrate remain connected by reagent solution 402 of distal tip 404. Typically, intermediate separation d3 is at least about 5 µm (e.g., at least about 10 µm) and about 30 µm or less, about 25 µm or less). For example, intermediate separation d3 may be about 20 µm.

In Fig. 3e, distal tip 404 and substrate 102 are maintained at intermediate separation d3 for an incubation time so that at least some (e.g., at least about 10%, at least about 25%, at least about 40%) of reagent solution 402 at the distal tip evaporates so that only a remaining portion 402' of reagent solution 402 remains. Typically, only about 75% or less (e.g., about 50% or less) of reagent solution 402 evaporates to leave solution 402' remaining. The incubation time depends on the nature of the solution 402 (e.g., the probe compound concentration and the solvent vapor pressure) and distal tip 404 environment (e.g., the relative humidity and temperature). Typical incubation times are longer (e.g., at least 5 times as long, at least 10 times as long, at least 20 times as long, at least about 35 times as long) than the period of time for which the tip and substrate are in the adjacent position d2. Exemplary incubation times are least about 5 seconds (e.g., at least about 10 seconds at least about 20 seconds, at least about 25 seconds).

In Fig. 3f, after the incubation time at intermediate separation d3, at least one of the distal tip 404 and substrate 102 are moved laterally relative to the other to dispense reagent solution 402' along a major axis a2. In Fig. 3g, at the completion of the lateral movement, distal tip 402 and substrate 102 are separated so that they are no longer connected by the reagent solution. For example, distal tip 404 and substrate 102 can be returned to initial separation d1. The method can be repeated (e.g., using different reagent solution) to dispense elongate test zones at each of multiple locations of the substrate.

In general, the vertical separation of the distal tip and substrate is changed by moving the distal tip relative to the substrate. In general, the lateral translation of the distal tip and substrate is performed by translating the substrate relative to the distal tip. Exemplary reagent solutions, probe compounds, and dispensing devices are described in U.S. provisional application 60/826,678 filed 22 September 2006.

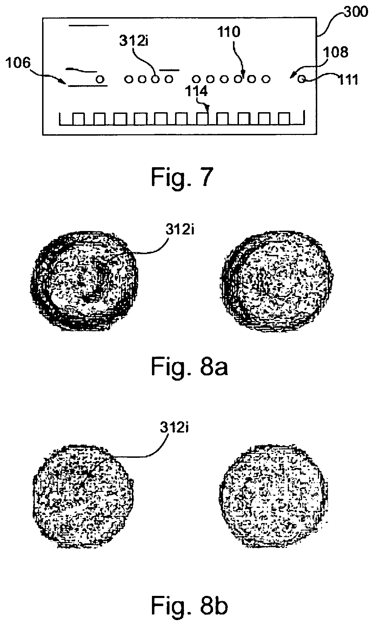

As seen in Fig. 3a and referring also to Figs. 8a and 8b, the method for producing elongate test zones 112i provides a more homogenous distribution of probe compounds than a dispensing method that omits the step of lateral moving the distal tip and substrate. Test zones 112i include a first portion 119 and a second portion 121. The distribution of probe compounds in the first portion 119 is more homogenous than in second portion 121 or in test zones 312i, which were prepared without the step of lateral movement.

Returning to Fig. 1, reference zone 117 produces a response detectable by detector 504 independent of the presence of any analyte in a sample. Reference zone 117 typically includes a fluorescent medium (e.g., a polymer or immobilized fluorescent molecule). Reference zone 117 is discussed further below in regard to operation of system 500.

Indicia 116j of reference pattern 114 are configured to be read by reference pattern reader 506 of system 500. Indicia 116j are composed of magnetic material (e.g., magnetic ink). Pattern reader 506 can detect the presence of indicia 116j. Reference pattern 114 is discussed further below in regard to operation of system 500.

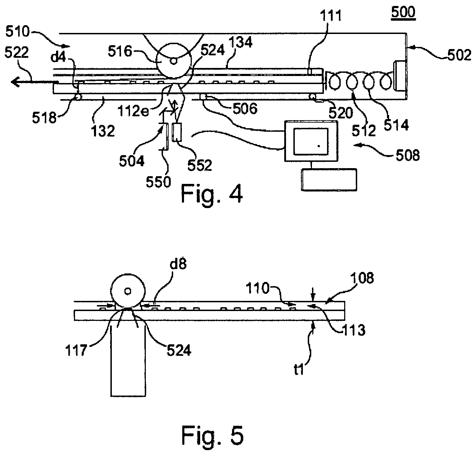

Returning to Fig. 4, housing 502 of operating system 500 includes an opening 510 to receive device 100, a compression system including a compression roller 516 and support rollers 518,520, and a translation actuator 512 including a damped spring 514. When device 100 is received within housing 500, detector 504 defines an optical detection zone 524 within channel 110. In use, device 100 is translated with respect to detection zone 524. Test zones 112i sequentially pass into and out of the detection zone. Detector 504 sequentially detects the interaction between a sample and successive test zones 112i. Detector 504 also senses reference zone 117.

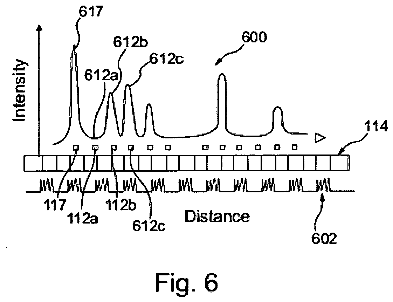

Referring to Fig. 6, detector 504 outputs a signal 600 as a function of the distance (relative or absolute) that device 100 is translated. Signal 600 includes a peak 617 indicative of reference zone 117 and peaks 612i indicative of the interaction at each zone 112i. Simultaneously, pattern reader 506 outputs a signal 602 indicative of indicia 116i as a function of distance that device 100 is translated. Because indicia 116i are related spatially to test zones 112i, processor 508 can determine when detection zone 524 coincides with a particular test zone even if that test zone exhibits no signal (e.g., as for test zone 112a which exhibits a signal 612a that is indistinguishable from zero). Reference zone 117 and corresponding signal 617 can be used alternatively or in combination with signal 602 to determine which regions of signal 600 correspond to particular test zones.

We next discuss the compression system. In use, the compression system compresses device 100 to reduce the distance between substrates 102,104 within channel 110. When device 100 is received within housing 502, an outer surface 132 of first substrate 102 is oriented toward support rollers 518,520 and an outer surface 134 of second substrate 104 is oriented toward compression roller 516. A distance d4 between support rollers 518,520 and compression roller 516 is less than a thickness t1 (Fig. 5) of device 100. Because second substrate 104 relatively flexible as compared to first substrate 102, compression roller 516 compresses second substrate 104 causing a local reduction in distance d6 between inner surface 103 of second substrate 104 and inner surface 105 of first substrate 102.

In the relaxed state (e.g., uncompressed state) (Fig. 2), distance d6 is typically at least about 25 µm (e.g., at least about 50 µm, at least about 75 µm). In the uncompressed state, distance d6 is typically about 500 µm or less (e.g., about 250 µm or less). In the locally reduced distance state (e.g., locally compressed state) (test zone 112e in Fig. 4), distance d6 is typically about 15 µm or less (e.g., about 10 µm or less, about 5 µm or less, e.g., about 2.5 µm or less). Examples of fluorescence detection performed between surfaces separated by a reduced distance state are described in U.S. continuation of International Patent Application PCT/EP2005/004923.

As seen in Figs. 4 and 5, the compression system reduced distance d8 within channel 110 over only a portion of the length of channel 110. Typically, distance d8 is about 5 times the length or less (e.g., about 3 times the length or less, about 2 times the length or less, about the same as) than distance d7 separating test zones 112i.

Typically, distance d7 is large enough that optical detection zone 524 defined by detector 504 encompasses fewer than all (e.g., 5 or fewer, 3 or fewer, 2 or fewer) of test zones 112i within channel 110. d7 may be large enough that a width of detection zone 524 along major axis a1 of channel 110 does not simultaneously contact more than 3 (e.g., not more than two, not more than one) test zone 112i. A width of detection zone 524 perpendicular to major axis a1 of channel 110 is typically about the same as or less (e.g., no more than 75% of, no more than 50% percent of, no more than 30% of) the length of test zones 112i along axis a2 thereof.

In use, sample liquid is applied to inlet 106. Capillary force draws the sample along channel 110 toward reservoir 108. The sample liquid contacts test zones 112i along channel 110. Analytes within the sample interact with probe compounds of the test zones. After a suitable incubation time, device 100 is inserted into housing 500 to compress spring 514 of translation actuator 512. During insertion of device 100, compression roller 516 and support rollers 520 are spaced apart so that device 100 is not compressed. Once device 100 is fully inserted, detection zone 524 is positioned approximately overlapping reference zone 117. Compression roller 516 locally compresses channel 110 (Fig. 5).

When the interactions between the analytes of the sample and the test zones 112i are ready to be determined (e.g., after an incubation period), translation actuator 512 translates device 100 with respect to detection zone 524 of detector 504 (Fig. 4). Test zones 112i pass sequentially through detection zone 524 and are illuminated with light from light source. Compression roller 516 is arranged so that the localized reduction of distance d6 corresponds spatially to detection zone 524. Accordingly, light detector sequentially detects light from test zones 112i while each is in the locally reduced distance state (e.g., locally compressed state) (test zone 112e in Fig. 4). Fluorescence arising from each test zone is collected by lens and detected by light detector. The sequential localized reduction of distance d6 and optical determination continues until each test zone has translated through detection zone 524.

In addition to the probe compounds of each test zone and analytes, other materials are present in channel 110 between inner surface 103 of second substrate 104 and inner surface 105 of first substrate 102. Examples of such materials include sample concomitants and reagents (e.g., unbound or un-reacted optical probes). These materials typically produce background emission (e.g., fluorescence or scattered light) that is not associated with the interaction of the sample with test zones 112i. The intensity of the background emission is generally proportional to the amount of such materials remaining between the inner surfaces at the location corresponding to detection zone 524. The intensity of the optical signal that is indicative of the interaction at each test zone, however, is spatially localized in the vicinity of that test zone. Light detector receives and detects both fluorescence indicative of the interaction and the background emission.

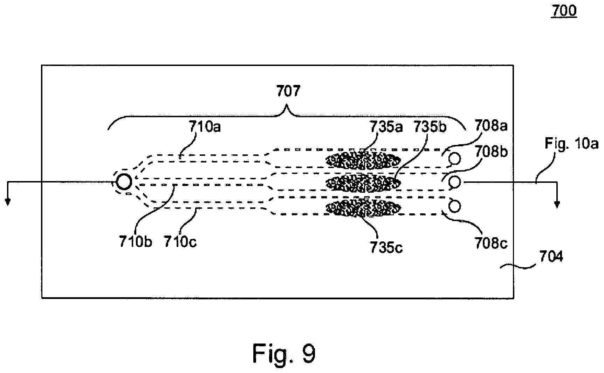

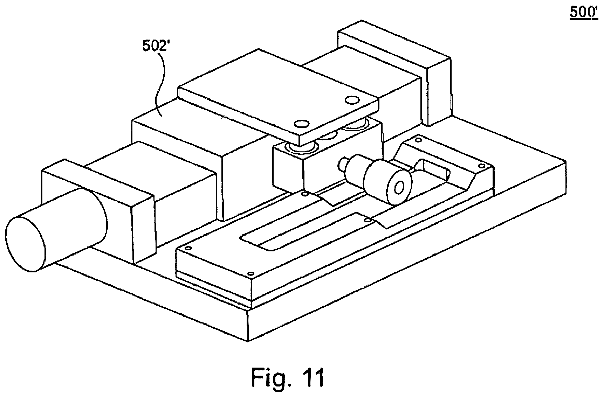

Referring to Figs. 9, 10a, and 11, a microfluidic device 700 and an operating system 500' can be used to assay a sample to determine the presence (e.g., qualitatively and/or quantitatively) of one or more analytes. Typically , one or more of the analytes comprise particles such as viruses, bacteria, cells, fungi, or spores. For example, any of the particles described in International Patent Application PCT/EP2006/068153 can be detected.

Microfluidic device 700 includes first and second substrates 702,704 defining a microfluidic network 707 including an inlet 706 and, in communication therewith, multiple channels 710a,710b,710c each having a respective reservoir 708a,708b,708c. Each reservoir includes a reagent material 709a,709b,709c (e.g., a probe compound) configured to participate in an assay for an analyte. Device 700 may include a reference pattern 114 including multiple indicia 116j (not shown in Figs. 9, 10a, 11) which may be the same as that discussed above.

Operating system 500' includes a housing 502', a detector 504', a reference pattern reader (not shown), and a processor in communication with detector 504' and pattern reader. Detector 504 is an optical fluorescence detector that detects complexes comprising an analyte (e.g., a particle) and a detectable label (e.g., an optical label). Examples of suitable labels are described in International Patent Application PCT/EP2006/068153. Detector 504' includes a light source 550' (e.g., a light emitting diode or a laser diode) and an optical detector 552' (e.g., a first order detector such as a diode array or a multidimensional detector (e.g., an imaging detector such as a charge coupled detector)). The optical detector typically and spatially selectively detects light from a respective detection zone defined within each channel of the microfluidic device.

We now discuss microfluidic device 700 and system 500' in greater detail.

First substrate 702 is typically optically transmissive (e.g., clear) with respect to a wavelength of light useful for exciting and detecting fluorescence from fluorescent labels. For example, first substrate 702 may transmit at least about 75% (e.g., at least about 85%, at least about 90%) of incident light in a least one wavelength range between about 350 nm and about 800 nm. First substrate 702 can be formed of, for example, a polymer, glass, or silica. Second substrate 704 is typically formed of a pliable or flexible material (e.g., an elastomeric polymer). First substrate 702 may be less flexible than second substrate 704. For example, first substrate 702 may be substantially rigid (e.g., sufficiently rigid to facilitate handling of device 700).

Channels 710a-710c typically support movement of liquid sample therein but are typically not capillary channels (i.e., liquid typically does not move within the channels of device 700 by capillary action). For example, one or more internal surfaces of the channels may be hydrophobic to inhibit capillary movement of the liquid sample. Alternatively, or in combination, the internal dimensions of the channels may be too large to permit capillary forces to drive substantial movement of the sample therein. Of course, the channels may be capillary channels.

Device 700 is shown with 3 channels and corresponding reservoir but generally has a number N channels and corresponding reservoirs where N is at least 1 and is typically less than 20.

Each reservoir 708i typically includes a reagent 735i (e.g., a detectable label such as an optical label) configured to provide a detectable interaction in the presence of an analyte. The interaction can include, for example, binding of a corresponding analyte to a label to form complex comprising the analyte and one or more of the labels. Examples of such complexes are described in International Patent Application PCT/EP2006/068153. Each reagent is typically configured to permit detection of a different analyte.

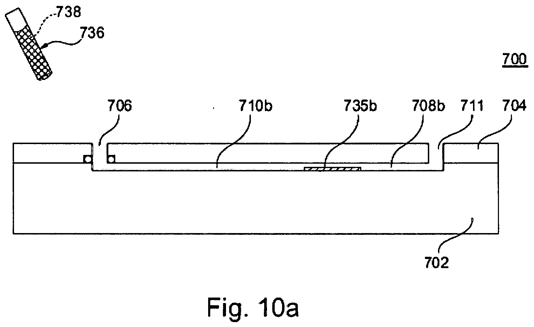

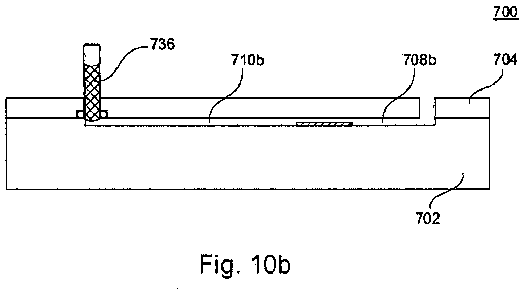

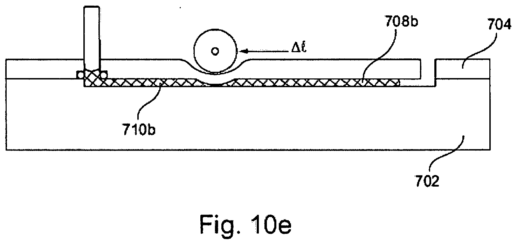

Referring to Figs. 10b-10f, device 700 can be operated as follows. An amount of liquid sample 738 (e.g., a biological liquid such as blood, saliva, or urine) is introduced to a capillary 736. Capillary 737 is typically a standard capillary (e.g., an end-to-end capillary such as a plastic capillary). An end-to-end capillary includes an internal bore and first and second openings, one at either end of the bore. The capillary may be anti-coagulant coated such as with heparin. Examples of suitable capillaries include 20µl heparin coated capillaries available from Kabe Labortechnik (Nürnbrecht - Elsenroth, Deutschland; http://www.kabe-labortechnik.de/index.php? sprache=de&akt_seite=startseite_produkte.php). In general, the capillary bore is configured to contain a total volume V of liquid sample. Volume V is typically about 25 microliters or less (e.g., about 20 microliters or less, about 15 microliters or less, about 10 microliters or less). In general, volume V is about 5 microliters or more (e.g., about 7.5 microliters or more).

As seen in Fig. 10b, inlet 706 of device 700 is configured to accommodate capillary 736. Sample 737 typically remains within capillary 736 and does not enter the microfluidic device until subjected to an introduction force.

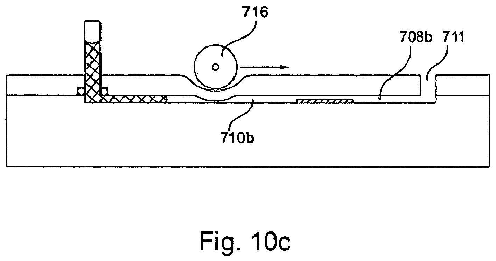

As seen in Fig. 10c, an introduction force can be applied to sample 737 by reducing a distance between internal surfaces of substrates 702,704 to reduce a volume within the micro fluidic network. For example, Fig. 10c illustrates a roller moving along an a portion of the micro fluidic network. Typically, the compression causes the opposed internal surfaces to contact one another. As the volume within the channel increases following decompression of a given region of channel, a reduction in the gas pressure acting upon an internal surface 739 of the liquid sample 737 causes the sample to be forced into the micro fluidic network. The compression and decompression can be performed in a single continuous movement of roller 716 along the microfluidic network or can be performed sequentially in multiple steps as in a peristaltic fashion.

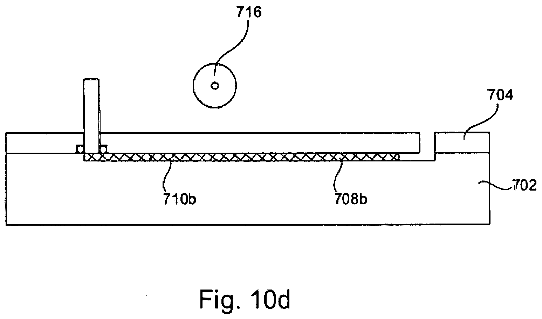

As seen in Fig. 10d, substantially all (e.g., at least 70%, at least 80%, at least 90%, at least 95%, essentially all) of the volume V of liquid sample 737 is drawn into the microfluidic network. At least 90% of volume V may be drawn into the network.

Liquid sample within the microfluidic network enters each of channels 710i and reservoirs 708i and mobilizes the reagents within each reservoir to form a mixture. Typically, formation of the mixture is assisted causing bulk motion of the liquid sample within the microfluidic network. Such bulk motion is typically caused by compression and decompression of the microfluidic device to reduce an internal distance between substrates 702,704. The compression and decompression can be performed in a peristaltic fashion by repeated movements of at least one of the roller 716 and microfluidic device 700 with respect to the other.

In general, the total volume of the mixtures formed by the combination of reagents 735i in the N channels of device 700 includes at least about 70% (e.g., at least about 80%, at least about 90%, at least about 95%, essentially all) of the amount of liquid sample introduced to the device 700. For example, the total volume of the mixtures formed by the combination of reagents 735i in the N channels of device 700 includes at least about 90% of the amount of liquid sample introduced to the device 700.

Within each mixture of the microfluidic device, particles, if present, combine with detectable label to form complexes. After a suitable incubation period to permit complex formation, the presence of complexes is detected. Each reagent 735i is typically configured to permit detection of a different analyte. Examples of detection of complexes are described in International Patent Application PCT/EP2006/068153.

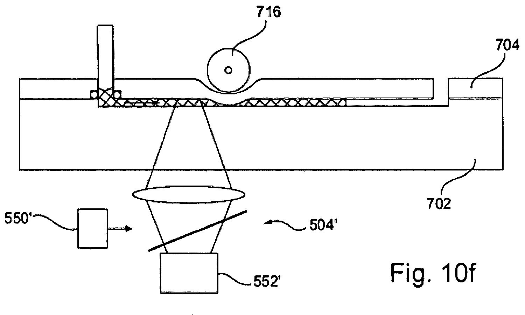

Referring to Fig. 10f, detection typically takes place within a subset of each mixture within the device. In general, detection can be performed within multiple different subsets of each mixture. For example, different subsets of each mixture can be moved through the detection zone by moving roller 716 in a compressed state to move a fresh portion of the mixture into each detection zone. This can be performed multiple times so that substantially all (e.g., at least 70%, at least 80%, at least 90%, at least 95%, essentially all) of each mixture can be subjected to detection. Here, detection is performed with roller 716 in a compressed state. Mixture that has already been subject to detection enters capillary 736, which acts as a waste container.

Detection may be performed by scanning the device 700 with respect to the optical detector so that each detection sequentially comprises a different subset of the solution. This can be performed multiple times so that substantially all (e.g., at least 70%, at least 80%, at least 90%, at least 95%, essentially all) of each mixture can be subjected to detection. In this embodiment, detection is performed with roller 716 in a decompressed state.

A structure, e.g. microfluidic channel, of the devices or systems described herein can include a capillary comprising a matrix. Accordingly, the methods described herein can be based on the use of structures, e.g. microfluidic channels, which include a capillary comprising a matrix.

The term "matrix" as used herein may refer to a filling or scaffold material which may be within capillary structures such as the capillary inlet. The matrix may be a three dimensional substrate or a composition of substrates or reagent medium. Further, the matrix may have a solid and/or at least partially amorphous and/or at least partially particulate and/or fabric-like and/or texture-like and/or sponge-like structure, for instance including one or more reticulate or polymeric materials. The term "reticulate or polymeric material", as used herein, may be any material having a fabric-like and/or texture-like and/or sponge-like structure that can be used for the manufacture of a matrix. E.g, the matrix may be or include a pellet and/or a filter cake and/or a substance cake and/or a cake wherein the pellet and/or filter cake and/or substance cake and/or cake includes reagents as described herein. However, the term "matrix" as used herein does not denote to a coating of a capillary structure such as a capillary inlet.

The term "matrix or three-dimensional reagent medium or solid reagent means or filling medium or scaffold material" as used herein may denote a medium or material which is fixated in a capillary and/or may be distributed over significant portions of the capillary structure. These portions typically include all areas of a cross section, e.g. they may not only be confined to outer, parietal sections of the capillary structure, but can include also central and near central areas of a cross section through a capillary structure. The matrix may encompass between about 10% and 95%, between about 20% and 75% or about 50% of the inner volume of a capillary structure.

The matrix may extend over the entire cross sectional area of the capillary structure. Alternatively, the matrix may not extend over the whole length of the capillary structure. The matrix may accordingly encompass between 5% and 75%, between about 15% and 60% or between about 35% and 50% of the entire length of the capillary structure. In cases in which not the entire length of the capillary structure is filled with the matrix, the matrix may extend over the entire cross sectional area of the capillary structure or comprise only a sub-section of the cross sectional area of the capillary structure, e.g. between about 5 and 95%, 10 and 80%, 25 and 60% or 50% of the cross sectional area of the capillary structure.

The term "fixate" may refer to any chemical binding between the matrix material and the capillary surface, e.g. a covalent chemical binding or an ionic or electrostatic interaction. Alternatively, or in addition, a fixation may also be a physical or mechanical binding caused, e.g. by the presence of interlocking units in the matrix material and the capillary structure.

A matrix as described herein may have several properties which allow an efficient interaction with liquids, in particular biological sample liquids like blood, plasma, serum, urine, sputum, lymph fluid, salvia or cerebrospinal fluid, cellular suspensions etc.

Typically, the matrix is wettable. The term "wettable" refers to the possibility of the matrix to allow a penetration with liquid molecules, typically with water molecules or biological samples such as blood samples.

Additionally, the matrix may allow the flow through of liquid, in particular of aqueous liquids or biological sample liquids. The term "flow through" denotes a movement of liquid or sample particles from one opening of a capillary or tube like structure to the other opening. The time necessary for a flow through may depend on the porosity, the individual size of the pores or the density or the cake-like or amorphous or particulate structure of the matrix material. Typically, the matrix or flow-through medium allows a flow through of liquids in a period of time which is increased by between 1 to 1000%, 5 to 500%, 10 to 100%, 20 to 75% or 30% in comparison to the time needed for a flow through of the same liquid in the same capillary structure or tube like structure comprising no matrix.

The matrix may be at least partially dissolvable in a liquid, e.g. in a liquid biological sample such as blood. The term "dissolvable" denotes the property of the matrix that the entire matrix or sub-portions therefore may be dragged away or carried away after having been brought into contact with a liquid. The term "carry away" relates not only to the breaking off of larger elements of the matrix, but also to the releasing of small, individual molecule-size or atom-size matrix components into the liquid.

Dissolution of the matrix as described herein may be complete or only partial, e.g. only from 1% to 99%, 5% to 90%, 10% to 75%, 20% to 60% or 30% to 50% of the matrix may be dissolved.

The dissolution rate of the matrix may depend on the flow velocity or flow rate of the liquid, the capillary flow properties, the cake-like or amorphous or particulate character of the matrix, the porosity of the matrix, the pore size, the chemical constitution of the liquid, e.g. the pH or ionic/salt concentration in the liquid, the ambient temperature and the like. Furthermore, the dissolution rate may be influenced by turbulences and/or shearing forces and/or swirls in the matrix. All these parameters may be suitably adjusted, e.g. by the design, form, porosity, density, cake-like, amorphous, particulate structure etc. of the matrix as the person skilled in the art would know, in order to optimize the dissolution behaviour.

Furthermore, the dissolution of the matrix may also be influenced by diffusion processes. Such processes may be controlled by adjusting the diffusion rate within the liquid or sample.

The matrix may also be used in non-capillary tubes. In such a scenario, the dissolution of the matrix material may be enhanced by the use of pumps or the like.

The matrix may comprise one or more reagents or components necessary for the processing and/or analysis of samples or analytes. The one or more reagents may be at least partially dissolvable in a liquid, e.g. in a liquid biological sample such as blood. Typically, a matrix, e.g. a solid matrix or solid filling material, comprises a means or reagent for the detection of analytes or sample ingredients and/or a means or reagent for the stabilization of analytes, sample ingredients or components of the matrix and/or a means or reagent for the amelioration of dissolving processes and/or a means or reagent for the inhibition of deterioration of analytes or sample ingredients and/or a means or reagent for lysing cells.

The matrix may be not dissolvable in a liquid. Such a non-dissolvable matrix may also comprise the one or more reagents or components as described above necessary for the processing and/or analysis of samples or analytes. The one or more reagents may be at least partially dissolvable in a liquid, e.g. in a liquid biological sample such as blood.

A "means or reagent for the detection of analytes or sample ingredients" as used herein may be a detectable label which reacts with the analyte to form a complex including the label, e.g. a labelled antibody, ligand or interactor for the analyte. E.g., an anti-CD4 and/or an anti-CD3 antibody may be used. Where more than one reagent for the detection of analytes are used the reagents may be provided with distinct fluorescent labels, e.g. labels having distinct emission wavelengths. A "label" may be any suitable label known to the person skilled in the art, e.g. a fluorescent label like phycoerythrin, Cy3 or Cy5 etc. Examples of labels may be derived from Slavik J. et al. (1994), "Fluorescent Probes in Cellular and Molecular Biology", CRC Publ. or from Horobin R. and Kiernan J. (2002), "Conn's Biological Stains: A Handbook of Dyes, Stains and Fluorochromes for Use in Biology and Medicine", Taylor and Francis. In some aspects of the disclosure, a label may be a dye, a particle, a catalyst such as an enzyme or the like.

A "means or reagent for the stabilization of analytes, sample ingredients or components of the matrix" may be, for example, a protein which has blocking capacities like BSA or HSA or a polypeptide fraction of purified porcine skin allergen (cf. P.J. Gaffney et al., J. Pharm. Pharmacol. 1996, 48: 896-898), e.g. Prionex (obtainable by Polysciences, Eppelheim, Germany), trehalose or the like and thus contributes to a reduction of decomposition processes. Furthermore, it may maintain the activity of analytes or components of the matrix during processing steps like, e.g. heat denaturation, lyophilisation or in long-term storage situations.

A "means or reagent for the amelioration of dissolving processes" as used herein, may denote chemical means like detergents, micelle formers or buffers which may enhance the separation of sample components or their processing and may contribute to a prevention of the attachment of sample components like proteins to the surface of capillary structures. For instance, polysorbate detergents such as Tween 20 may be used as a detergent.

The term "means or reagent for the inhibition of deterioration of analytes or sample ingredients" as used herein may relate to compounds which inhibit processes like, e.g. coagulation of biological analytes or degradation processes. Typically, a matrix may comprise anticoagulants like Hirudin and/or Ticlopidine and/or suitable DNAse inhibitors and/or RNAse inhibitors known to the person skilled in the art.

A "means for lysing cells" as used herein may denote reagents which actively break open or lyse cells. Exemplary means for lysing cells are chemical agents like NaOH, NH₄Cl or the like, detergents like saponins, Triton X114, sucrosemonolaureate, sodium dodecylsulfate polyacrylamide (SDS), N-laureyl-sacrosin-sodium salts or the like; and enzymes such as streptolysine, hemolysine or the like. For instance, lysing agents such as saponins may be used which may be more efficient in lysing red blood cells than white blood cells.

The result of the at least partial dissolving of the matrix as described herein above may be a complete or at least partial mixture of analytes or sample ingredients with components of the matrix. Such a mixture may be ready for subsequent assessment, e.g. in a microfluidic channel or detection region being associated with or in contact with the capillary structure or tube-like structure comprising the matrix as defined herein above. The mixture may be formed by capillary flow forces present in the capillary structure, or alternatively or in addition be formed by the use of pumps or similar facilities in a device as described herein.

The matrix may comprise freeze-dried components, e.g. be a lyophilisate of reagents as described herein. The term "freeze-dried" refers to the end product of a lyophilisation process which is carried out under low temperatures. Typically, freeze drying works by freezing the material and then reducing the surrounding pressure and adding enough heat to allow the frozen water in the material to sublime directly from the solid phase to gas. The freeze-drying process may be supported by the addition of lyoprotectants which safeguard the preservation of matrix components like, e.g., proteins, labels etc. Typically, lyoprotectants like polyhydroxy compounds such as sugars (mono-, di-, and polysaccharides), polyalcohols, and their derivatives, trehalose or sucrose may be used. During the freeze-drying process further compounds may be used, which, for instance, lead to an amorphous freezing of the matrix components. Typically, a cyclodextrin or derivative thereof such as hydroxypropyl-gamma-cyclodextrine, e.g. Cavasol W8-HP from Wacker Chemie (Germany) may be used for such a purpose.

The freeze-dry process may be carried out with a capillary tube or structure comprising the matrix components. For instance, the matrix components may be present as liquid or near liquid solution before the lyophilisation process starts. The parameters used for the lyophilisation or freeze-dry process may have an influence on the cake-like or amorphous or particulate character of the matrix, the porosity of the matrix, i.e. the pore size and/or density of the matrix. These parameters may be suitably adjusted. Details would be known to the person skilled in the art or can be derived from Kennedy and Cabral (1993), "Recovery Processes for Biological Materials", John Wiley & Sons Ltd.

Further, the matrix may be at least partially porous. The term "porous" denotes a material comprising in its interior and/or on its surface one or more pores and/or openings. The one or more internal pores and/or openings may be interconnected. The porosity of a material is typically defined as a percentage of the total volume of its voids, i.e. the internal pores and openings, available for fluid transmission to its overall total volume.

The porous material or porous matrix may have a pore size, measured as the pore diameter. The pore size defines the ability of analyte molecules to penetrate inside the matrix and interact with its inner surface. The ratio of the outer surface of a porous material to its inner is typically, for instance, about 1:1000. Surface molecular interactions mainly occur on the inner surface of matrix materials.

Methods for assessing the pore size are known to a person skilled in the art.

For instance, a convenient way to assess internal pore spaces in a material is the "water saturation method". In brief, a known volume of the porous material to be analyzed is incubated with a known volume of water for a defined period of time, for example for a few hours, to ensure that the material is fully saturated with water. Then, the excess (i.e. "unsaturated") water is removed and its volume measured. The volume of the pore space can subsequently be calculated by subtracting the volume of the excess water from the total volume of water originally used for the analysis. The porosity of the matrix may be determined by calculating the ratio of the volume of the pore space, as measured above, and the total volume of the matrix and by multiplying the result obtained with 100%.

Alternatively, the porosity of a material may be determined by (static volume) gas adsorption measurements. The principle of this method is based on the introduction of consecutive known amounts of an adsorbate (i.e. an adsorbable gas) into the sample material starting from high vacuum and increasing step by step the pressure up to the adsorbate saturation pressure. Adsorption of the injected gas by the sample causes the pressure to slowly decrease until an equilibrium pressure is established. The gas uptake can be calculated directly from the equilibrium pressure values but a dead volume calibration has to be performed before or after the measurement by a "blank run" (that is an analysis using an inert gas not adsorbed on the sample in the analytical conditions, most commonly used is helium). The method is further detailed, e.g., in Groen, J.C. et al. (2003) Micropor. Mesopor. Meter. 60, 1-10.

A further method known as "Capillary Flow Porometry" may be employed in order to assess the porosity of a material. The method is based on a spontaneous filling of porous material with wetting liquids. Subsequently, pressurized gas is used to remove liquids from pores to allow a gas flow. Pressure and flow rates through wet and dry samples can subsequently be used to compute the properties of the analyzed material.

A porous matrix as described herein may have a porosity of at least 30%, 40%, 50%, 60%, 70% or 80%.

Pores of a porous matrix as described herein may have pore diameter of about 0.001 µm to about 40 µm, of about 0.01 µm to about 10 µm or of about 0.1 µm to 5 µm

The amorphous and/or particulate and/or cake-like structure and/or porosity and/or pore size of the e.g. porous matrix may be adjusted in accordance with the nature and ingredients of the sample to be analyzed in a device. E.g., the porosity of a substance cake may be increased with increasing viscosity of the sample. Is, for example, a sample comprising entire eukaryotic cells to be analyzed the pore size of a matrix may be adjusted to a size having at least the size of a eukaryotic cell. Is, on the other hand, a sample comprising phages or virus particles to be analyzed, the pore size may be adjusted to the size of the phages or virus particles etc.

As a complementary property to porosity, a porous matrix may have a density. Typically, the overall density of the material decreases with increasing porosity. E.g., a porous matrix may have a density which is decreased by about 40% to 70% in comparison to the density of the same or a similar material having no pores or openings.

The matrix may be prepared by freeze-drying a solution comprising two types of antibodies labeled with different labels and further comprising substances which ensure the stability of the antibodies. A typical recipe for such a solution is:

| Substance | Volume/ µl |
|---|---|
| Anti-CD4 Antibody (e.g. from Beckton Dickinson, USA), Phycoerythrine-labeled | 0.075 |
| Anti-CD3 Antibody (e.g. from Beckton Dickinson, USA), Phycoerythrine-Cy5-labeled | 0.10 |
| Prionex (Polysciences, Eppelheim, Germany) | 0.25 |
| Cavasol W8-HP, 40% (Wacker Chemie GmbH, Germany) | 0.25 |
| Tween 20, 1% (Merck, Germany) | 0.05 |
| Hirudin, 50 µg/ml (Sigma Aldrich, Germany) | 0.10 |
| Ticlopidin, 5 mM (Sigma Aldrich, Germany) | 0.10 |

The solution may be filtrated by centrifugation through 0.2 µm pores for 2 minutes to remove particles. A degassing step of 1 minute may follow. Thereafter, the solution is ready to be filled into a capillary or capillary inlet or inlet region, e.g. by pipetting.

Filling of a capillary or capillary inlet with a solution may be done as follows. The solution, e.g. in an amount of p.e. 0.925 µl, may be pipetted manually into a plastic capillary which may be coated with EDTA. Immediately after that the capillary may be inserted into liquid nitrogen (e.g. in a plastic foam container) to freeze the content rapidly. The capillary may be kept under liquid nitrogen till they can be inserted into the freeze-drier.

Freeze-drying of a capillary or capillary inlet in order to provide the matrix may be done as follows. The capillary may be transferred with the liquid nitrogen into aluminum troughs, and these may be put into the freeze-drier. An exemplary drying cycle starts with 2 hours at -40°C and a pressure of 0.011 mbar. Then, an additional drying step for 1 hour at 20°C and a pressure of 0.001 mbar may follow.

At the end of the freeze-drying process the capillaries may be layered onto a drying medium (e.g. silica gel) and then distributed into little containers for storage (e.g. PCR-tubes or upper or lower part of a petri dish). These may be kept in aluminum pouches sealed under argon protection until mounting into the cartridges.

A typical recipe for a solution which may be freeze-dried in order to prepare a matrix in a capillary inlet is:

| Substance | Volume/ µl |
|---|---|
| Anti-CD4 Antibody (e.g. from Beckton Dickinson, USA), Phycoerythrine-labeled | 0.056 |
| Anti-CD3 Antibody (e.g. from Beckton Dickinson, USA), Phycoerythrine-Cy5-labeled | 0.075 |
| Saponin, 15 g/100ml (Sigma Aldrich, Germany) | 0.25 |
| Trehalose, 1 M (Sigma Aldrich, Germany) | 0.10 |
| H₂O | 0.419 |

The solution may be filtrated by centrifugation through 0.45 µm pores for 2 minutes to remove particles. Thereafter the solution is ready to be filled into a capillary inlet, e.g. by pipetting. Filling of the capillaries and freeze-drying of the solution in order to prepare the matrix may be performed as described above.

Methods directed to the introduction of samples or analytes into microfluidic channels and the analysis of the sample or analytes, e.g. by forming of mixtures and/or complexes as described herein above or below may comprise interactions of analytes with the matrix. The interaction may be, for instance, part of methods carried out in open or closed circuit devices or systems. Such methods may include all herein above-mentioned interactions. E.g., the analyte or sample may at least partially dissolve the matrix.

In a further aspect of the disclosure, devices or systems are provided which comprise or are associated with control elements. Further, methods are provided using such control elements or using devices or systems comprising or being associated with such control elements.

The term "control element" or "control feature" relates to a unit or factor or means which allows the testing, reviewing, examining, scanning, revising or inspecting of a device or system or sub-unit of the device or system as described herein or of a test result or a result of the analysis and also to the possibility to compare, verify and contrast obtained results during and/or after the use of a device or system or during and/or after performing the methods described herein. The term also denotes the performance of such controlling activities within the methods as defined herein above or below.

The term "controlling activity" may accordingly relate to the employment of internal testing or control elements or factors, which may be present within the device or system and/or must not added externally. Particularly, such internal control elements may allow a real-time and/or *in situ* checking of parameter without any need of recurring to external, separate and/or time-delayed controls.

A device or system may comprise analytes or analyte analogues being immobilized within the microfluidic channel. The term "analyte analogues" as used herein may denote an entity or compound or substance having the same or essentially the same binding behavior or reactivity, e.g. binding affinity, as the analyte to be examined with respect to a label or probe compound or capture molecule which is used for detection of the analyte to be examined. The analytes or analyte analogues being immobilized within the microfluidic channel may be particles. The term "particle" may refer to a physical, chemical or biological entity, which may be identical or similar to an analyte to be examined. A particle may be any suitable substance or material, e.g. an inorganic substance, a eukaryotic cell, a bacterium, a virus, a virus-like particle or any derivative thereof. For instance, a particle may be a cell, e.g. a cell showing a specific antigen, e.g. the same antigen as the analyte to be examined. An analyte analogue may be a bead showing a specific antigen, e.g. the same antigen as the analyte to be examined. The term "immobilization" means that the particle is fixated in the microfluidic channel, e.g. by chemical or mechanical means in a way that at least the surface structure, in particular the conformation and identity of surface proteins, is not modified or at least still allows a specific interaction with binding detection moieties like antibodies or ligands. Such an immobilized particle, e.g. an immobilized eukaryotic cell, T-cell or monocyte may be present in the microfluidic channel in predefined and/or known amount or concentration and/or at a predefined or known position. The amount of such particles, in particular cells, may be much higher than the amount of comparable analytes in the sample to be examined. Furthermore, the particles may be concentrated at a certain predefined or known spot or position of the microfluidic channel allowing for a rapid and easy verification of interaction with corresponding labeled interactors. The particles may subsequently be used for a control test aiming at the verification of labeling processes as defined herein below.

The term "controlling activity" may also refer to the practical testing of the device or system, e.g. in terms of malfunction of the entire device or system or sub-portions or elements thereof. For example, several control items of the device of system may be separately addressed and checked.

Such a control may involve the testing of labeling reactions and/or the presence of cells in a sample to be analyzed with the help of immobilized particles, e.g. immobilized cells, as defined herein above. The particles may be labeled or treated with labels similar or identical to the analytes to be detected or examined. Due to the known position and number of the immobilized particles it can be verified whether the labeling reaction was successful. The presence of a label may be tested with the help of appropriate chemical, optical or electronic measurement instruments or sensors, as known to the person skilled in the art.

Should the test result in a lack of, e.g. fluorescence emissions or a reduction of the emission value in comparison to a predefined known value after an appropriate elicitation, it may be concluded that the labeling process was not successful. The device may accordingly be stopped and/or the test(s) and/or the image(s) may be marked as invalid.

Should the test result, on the other hand, in a detectable, in particular validly detectable signal from the immobilized particles, whereas the co-treated analyte and/or sample does not provide any signal, it may be concluded that the analyte and/or sample does not comprise structures which would have allowed an interaction with the label, e.g. a labeled antibody. For example, if a labeled anti-CD4 or anti-CD3 antibody is used, a lack of emission signal from the sample, although the immobilized particles, e.g. immobilized T-cells, provide a signal, may be seen as an indication for the fact that no CD4- and/or CD3-bearing cells or components are present in the sample to be examined.

The immobilized particles may be concentrated at a certain predefined or known spot or position of the micro fluidic channel. Such a concentration of the particles may give rise to a strongly increased emission signal. Due to the increased intensity of the signal and its concentration in comparison to a signal derivable from an individual analyte, e.g. one cell, there will be no superimposition of the signals derivable from the immobilized particles and the examined analytes. A method comprises labeling particles immobilized in the microfluidic channel of a device or system with a fluorescent label; obtaining a first image comprising at least a subset of the immobilized particles; determining a first value indicative for the number of particles, e.g. the fluorescently labeled particles, in the first image; obtaining a further image of the subset of immobilized particles after an interim; determining a further value indicative for the number of particles, e.g. the fluorescently labeled particles, in the further image; and determining a third value indicative for the activity and/or quality of the fluorescent label and/or the quality of an interaction between a particle and reagent fluorescent label and/or the usability of the device or system and/or of any procedure, function, test or method carried out with or in said device or system and/or the accuracy of a test result obtained by using said device or system, based on a comparison of the first value and the further value. Such a method may be used as a positive control for a device or system, providing information about the quality of reagent substances and allowing a conclusion on the accuracy and quality of assay results obtained with the reagent substances, as mentioned herein above or below. A method comprises contacting particles immobilized within a micro fluidic channel of a micro fluidic network, device or system with an fluorescent label configured to bind the particles; forming complexes, each of the complexes comprising a fluorescent label and a particle immobilized within the microfluidic channel; obtaining a first image comprising at least a subset of the immobilized complexes; determining a first value indicative for the number of complexes in the first image; obtaining a further image of the subset of immobilized complexes after an interim; determining a further value indicative for the number of complexes in the further image; and determining a third value indicative for the activity and/or quality of the fluorescent label and/or the quality of an interaction between a particle and a fluorescent label and/or the usability of the device or system and/or of any procedure, function, test or method carried out with or in said device or system and/or the accuracy of a test result obtained by using said device or system, based on a comparison of the first value and the further value. The particles to be used in these methods have been defined herein above. These particles are labeled or treated with fluorescent labels similar or identical to analytes which may be detected or examined as described herein above or below, e.g. with fluorescent labeling reagents comprising or consisting of dyes, ligands, antibodies or any other suitable entity known to the person skilled in the art. Ligands or antibodies may accordingly be labeled with dyes, e.g. fluorescent dyes or conjugated to fluorescent labels or dyes as mentioned herein above or known to the person skilled in the art. Particles may be immobilized according the protocols as mentioned herein above. A labeling reaction may be carried out on immobilized particles. A first and a further value indicative for the number of particles detected at the predefined spot or position are determined. For this, a first image comprising at least a subset of the immobilized particles may be obtained in a time period of between about 0.01 sec to 10 min after the labeling reaction is initiated, e.g. after 20 sec, 30 sec, 40 sec, 50 sec, 1 min or 1.5 min. The time period between the initiation of the labeling reaction and the obtaining of a first image may be made dependent on parameters known to the person skilled in the art such as the nature of the labeling reaction, e.g. the chemistry involved in the labeling, the labels used, the velocity of the labeling reaction etc. Obtaining a first image may also be combined, in a further embodiment, with the herein defined methods involving the determination of optical parameters like focus, area of the image, exposure time etc. Typically, such a method involving the determination of optical parameters may be carried out before a first image is obtained. Parameters like distance, focus, predefined area, exposure time etc., which were defined and adjusted according to a method as described herein may be kept once a first image is obtained. In some embodiments, a" subset of the immobilized particles" may be any suitable subset of immobilized particles, e.g. more than 0,01 %, more than 0,1 %, more than 1%, more than 2, 3, 5, 10, 20, 50% or a proportion of 0.01%, 0,05%, 0.1%, 0.5%, 1%, 2%, 5%, 7%, 10%, 15%, 20%, 25%, 30%, 35%, 40%, 50%, 60%, 70%, 80%, 90% or essentially all immobilized particles in a microfluidic channel of a device or system. Additionally or alternatively, the method may be combined with a method which allows to decide on the filling status of a microfluidic channel as described herein.

After an interim a further image of the subset of immobilized particles may be obtained. The term "interim" as used herein refers to any suitable period of time, e.g. a period of time of between about 1 sec and 5 h, 5 sec and 3 h, 7 sec and 1 h, 10 sec and 30 min, 20 sec and 20 min, 1 min and 15 min, 5 min and 10 min, or about 1, 2, 3, 4, 5, 6, 7, 8, 9, 10 min. The interim to be used may depend on the test, device or system used, the nature and form of the microfluidic channel, the nature of the labeling reaction, the environmental temperature, the pH in the microfluidic channel, the nature and form of the particle etc. Depending on these parameters the interim may be adjusted or changed if necessary.

Based on the further image of the subset of immobilized particles a further value indicative for the number of particles in the further image may be determined. The step of obtaining a further image and of determining the number of particles in said further image may be repeated several times, e.g. 2, 3, 4, 5, 6,7, 8, 8, 9, 10, 15, 20, or n times, wherein n is any integer >2. If more than one further image is obtained and if correspondingly more than one further value indicative for the number of particles in the further image is determined any one or any subgroup or combination of images or further values indicative for the number of particles may be employed for further analyses. For example, a statistical evaluation of these values may be carried out or an average value may be calculated.

In a further step, a third value indicative for the activity of the optical label or labeling reagents and/or the quality of the optical label or labeling reagent and/or the quality of an interaction between a particle and a labeling reagent and/or the usability of the device or system and/or any procedure, function or method carried out with or in said device or system is determined. This determination is based on a comparison of the first value indicative for the number of particles obtained after the termination of the labeling reaction and one or more further values indicative for the number of particles in the one or more further images obtained. This comparison allows to use, in particular, labeling or staining kinetics of the particles in order to access information about the activity and/or quality of the labeling reagent(s) and/or the quality of the interaction between a particle and the labeling reagent(s), i.e. the functioning of the labeling reaction generally and, thus, the usability of the device or system and/or any procedure, function or method carried out with or in said device or system. Due to the increase in incubation time in the interim between the first image and the one or more further images it may be assumed that more particles are labeled or detectable than before.

As a quality threshold for labeling reactions to be carried out, e.g. labeling of cells with fluorescence markers or dyes, the third value is an increase of the further value with respect to the first value by at least about 10%, optionally by at least about 20%, or by at least about 25%, or by at least about 30%, or by at least about 35%, or by at least about 40%, or by at least about 50%. Thus, if the third value is within the indicated range the device or system is considered as being usable and/or any procedure, function or method carried out with or in the device or system may be confirmed. If a concomitant assay is carried out, corresponding results may be recorded and/or further processed according to the particulars of the assays as described herein above or below.

Conversely, if the third value is an increase of the further value with respect to the first value of less than about 10%, optionally less than about 20%, or less than about 25%, or less than about 30%, or less than about 35 %, or less than about 40% or less than about 50% the test is considered as being inaccurate.

In some embodiments, only the information relating to the number of cells detected in the first and further images is stored or processed for further analysis.

Immobilized T_{H}-cells (i.e. T helper cells) may be used as positive controls in order to evaluate the function of the different reagents used in the assay. In some embodiments, immobilized T_{H}-cells may be included in a fraction of immobilized mononuclear cells (MNC). Such mononuclear cells can be obtained, for instance, from a full blood sample using a density gradient centrifugation step. In some embodiments, T_{H}-cells for immobilization can be obtained, for instance, from an *in vitro* cell culture.

In the following, a typical protocol for preparing T_{H}-cells from a whole blood sample is described.

Four milliliters of Histopaque-1077 (Sigma Aldrich) may be filled into centrifugation tubes, heated to 18-20°C and covered with 4 ml of an EDTA full blood sample. The centrifugation tubes may be placed in a centrifuge and spinned 30 min at 400 g at room temperature. After centrifugation, the upper layer may be discarded and the fraction containing the mononuclear cells may be transferred into a new reaction tube. For washing, the cells may be resuspended in PBS, followed by a centrifugation step for 10 min at 250 g. The supernatant may be removed and the pellet may be resuspended in PBS. Washing may be repeated one to several times.

In some embodiments, the number of cells in the solution may be adjusted for the following spotting procedure. For this purpose, a typical cell count procedure, using e.g. a Beckton Dickinson FACSCalibur, may be performed according to the device manufacturer's instructions.

In some embodiments, for immobilizing the cells the number of cells may be adjusted to a number from 2,000/µl to 20,000/µl, from 5,000/µl to 15,000/µl, or from 7,500/µl to 12,500/µl or about 10,000/µl.

In some embodiments, phosphate buffered saline (PBS) may be used for adjusting the cell number to a desired value.

In some embodiments, the cells are immobilized via spotting onto the surface. Such a spotting solution may be prepared by resuspending cells in PBS, for instance, in a concentration of around 10.000 cells per µl.

In some embodiments, one or more drops of the spotting solution may be transferred to a surface, for instance, on the bottom of the detection region of a device as described herein. For instance, 1, 2, 3, 4 or 5 or morespots are spotted onto the surface. In some embodiments, 1, 2 or 3 drops á 100 nl cell suspension may be transferred to the surface. Further, the drops may be spotted directly adjacent to each other, e.g. in such a manner that they flow together after spotting.

In some embodiments, the surface for spotting positive controls such as T helper cells may be treated before spotting. For instance, plasma treatment of the surface may effect the hydrophobicity of the surface. In some embodiments, a hydrophilic surface for spotting may be used.

In some embodiments, drying of the spotted cells takes place at ambient conditions.

In addition or alternatively, other methods for immobilizing cells such as those described in US 6,008,052 can be used. For instance, a dried mammalian cell may be used as a reference particle in an immunoassay whose light scatter properties are substantially unaltered upon rehydration and whose autofluorescence does not increase with time wherein the cell has been fixed with a fixative, reduced with a Schiff's base reducing agent and then dried in the presence of a protein stabilizing compound.

A further control may involve the checking of the detection, e.g. cell count plausibility on the device or assessment system. The test may be based on the detection of the presence of certain target analytes, e.g. T-lymphocytes. For instance, it may be checked whether the number of T-cells is higher than the number of monocytes (i.e. the amount of detectable markers CD3+ CD4+ and CD3+CD4- must be elevated in comparison to CD3-CD4+). The test may preferably be performed after a verification of the labeling reaction as defined herein above has been successful finished. The checking may be carried out, e.g. with the help of appropriate chemical or biochemical marker or label reagents and optical and/or electronic sensors as well as well as suitable software applications known to the person skilled in the art. The test may be performed after a label reaction as described herein above or below has been carried out. Should the test result in an inaccurate or invalid number of target analytes, e.g. T-lymphocytes the use of the device may be stopped and/or the test(s) may be marked as invalid.

A device or system as described herein may further include several elements or components or technical modules such as motors, light sources such as LEDs, interfaces, processors, data storage units, optical systems, barcode or data matrix readers, internal or external power supplies, pumps, actuators, electronic parts etc. Controls may be directed to the testing of the various elements or technical modules.

A control may be directed to the testing of the device with respect to a system, a scanning unit or a detection unit, i.e. the checking whether the device is properly inserted or inside of a system or properly associated with a scanning or detection unit. This control step may be carried out before and/or during an assay. E.g. if the control step is carried out before the assay has started and a device is detected in the system or associated with a scanning or detection unit, a rejection of the device may be initiated. If, on the other hand, the control step is carried out after the assay has started and no device is detected in the system or associated with the scanner, a user may be prompted to insert the device.

A control may be directed to the testing of a motor of the system or associated with device as described herein. A motor check may be carried out. In this context, a reference position may be checked by testing the move of end-switches to axis reference positions. The checking may be carried out with the help of appropriate mechanical, optical or electrical/electronic sensors as known to the person skilled in the art, which allow a measurement of the movements. Should the test result in an inaccurate positioning the use of the device may be stopped.

Furthermore, a movement control of the motor may be carried out by testing the smooth running on all axes of the device or system. In particular, the smooth running of tray and roll may be controlled. The checking may be carried out with the help of appropriate mechanical, optical or electrical/electronic sensors as known to the person skilled in the art, which allow a measurement of the movements and/or the speed of system elements, in particular of the tray and roll. Should the test result in an inaccurate moving behavior or an inaccurate speed of these elements the use of the device may be stopped.

A further control may involve the checking of current overload of the motor. The checking may be carried out, e.g. with the help of appropriate software as known to the person skilled in the art. The current overload of the motor may also be checked via the functionality of a motor fuse. The checking may be carried out, e.g. with the help of appropriate software as known to the person skilled in the art. Should the test result in inaccurate loading or overloading the use of the device may be stopped.

A further control may involve the checking of LED currents. In particular, the emitted light intensity may be controlled. The checking may be carried out, e.g. with the help of appropriate mechanical, optical or electrical/electronic sensors as known to the person skilled in the art, which allow a measurement of the LED current. Measured values may be compared to predefined reference values. Should the test result in inaccurate LED currents or incorrect light intensities the use of the device may be stopped.

A further control may involve the checking of filter element positions and changeability by assessing the centering of the filter elements along the optical axis. The checking may be carried out, e.g. with the help of appropriate mechanical, optical or electrical/electronic sensors as known to the person skilled in the art. Should the test result in inaccurate filter positioning or changeability the use of the device may be stopped.

A further control may involve the checking of hardware elements and/or the device by assessing start- and stop-bits. The checking may be carried out, e.g. with the help of appropriate software as known to the person skilled in the art. Should the test result in an inaccurate presence of start- or stop-bits the use of the device may be stopped.

A further control may involve the checking of barcodes on a device by assessing parity values. The checking may be carried out, e.g. with appropriate optical and/or electrical/electronic sensors as known to the person skilled in the art. Should the test result in an inaccurate parity, the device cannot be read and may be stopped.

A further control may involve the checking of power supply voltage. The checking may be carried out, e.g. with the help of appropriate electrical or electronic sensors as known to the person skilled in the art. Should the test result in an inaccurate power supply, the system cannot be started and the use of the device may be stopped.

A further control may involve the checking the battery or accumulator charge, in particular the minimum battery or accumulator charge. The checking may be carried out, e.g. with the help of appropriate electrical or electronic sensors as known to the person skilled in the art. Should the test result in an inaccurate battery or accumulator charge, the system or device cannot be started with a battery and the use of the device may be stopped. Alternatively, the user may be prompted to recharge the battery or accumulator or replace it.

A further control may involve the checking of the end-to-end filling of a capillary, e.g. a control to determine whether at least 50%, 60%, 70%, 80%, 90% or 100% of a capillary are filled. Optionally, the filling with 5µl blood may be tested. The testing may be carried out with the help of appropriate optical, electrical or electronic sensors as known to the person skilled in the art. The testing may be carried out using a light barrier or the like. Should the test result in an inaccurate filling status the device cannot be used and an error message may be displayed.

A further control may involve the establishment of database connection of the system. The testing may be carried out with the help of appropriate electronic or software tools as known to the person skilled in the art. Should the test result in an inaccurate or defective database connection, the system cannot be started and/or the device cannot be used and an error message may be displayed.

A further control may involve the testing of the connection status. The testing may be carried out with the help of appropriate electronic or software tools known to the person skilled in the art. Should the test result in an inaccurate connection status, the system cannot be started and/or the device cannot be used and/or an error message may be displayed.

A further control may involve the testing of a detection module connection status. The testing may be carried out with the help of appropriate electronic or software tools known to the person skilled in the art. Should the test result in an inaccurate imager module connection status, the system cannot be started and/or the device cannot be used and/or an error message may be displayed.

A further control may involve the testing of a movement of the tray to the loading position. The testing may be carried out with the help of appropriate electric, optical or electronic sensors known to the person skilled in the art. Should the test result in an inaccurate movement or a inaccurate localization of the tray with respect to the loading position, the system cannot be started and/or the device cannot be used and/or an error message may be displayed.

A further control may involve the testing of visualization performance. The testing may be carried out with the help of appropriate electronic or software tools known to the person skilled in the art. Should the test result in a visualization error, the system cannot be started and/or the device cannot be used and/or an error message may be displayed.

A further control may involve the testing of communication between system application and a camera. The testing may be carried out with the help of appropriate electronic or software tools known to the person skilled in the art. Should the test result in an incorrect or defective connection between the system application and the camera, the system cannot be started and/or the device cannot be used and/or an error message may be displayed.

A further control may involve the testing of the functionality of input buttons of the system. The testing may be carried out with the help of appropriate electric, electronic or optical sensors known to the person skilled in the art. Should the test result in an incorrect input button function, the system cannot be started and/or the device cannot be used and/or an error message may be displayed.

A further control may involve the testing of the functionality of save settings. The testing may be carried out with the help of appropriate software tools known to the person skilled in the art. Should the test result in an impossible saving of settings, the system may be started and/or the performance of an assay may be continued and/or an error message may be displayed.

A further control may involve the testing of the display of available results. The testing may be carried out with the help of appropriate software tools known to the person skilled in the art. Should the test result in problems with displaying an analysis result, the system may be started and/or the performance of an assay may be continued and/or an error message may be displayed.

A further control may involve the testing of the visualization of available results. The testing may be carried out with the help of appropriate software tools known to the person skilled in the art. Should the test result in problems with the visualization of results, the system may be started and/or the performance of an assay may be continued and/or an error message may be displayed.

A further control may involve the checking of data removal. The check may be carried out with the help of appropriate software tools known to the person skilled in the art. Should the test result in problems with the removal of data, the system may be started and/or the performance of an assay may be continued and/or an error message may be displayed.

A further control may involve the checking of data editing. The check may be carried out with the help of appropriate software tools known to the person skilled in the art. Should the test result in problems with the editing of data, the system may be started and/or the performance of an assay may be continued and/or an error message may be displayed.

A further control may involve the checking of the device type and/or version and/or its compatibility with the system. The checking may be carried out with the help of appropriate electronic or optical sensors or software tools known to the person skilled in the art. Should the test result in an incompatibility, in particular the impossibility to analyze the device with the software installed, the system cannot be started and/or the device cannot be used and/or an error message may be displayed.

A further control may involve the checking of the expiry data coded for instance in the device barcode with respect to the data provided in the system. The checking may be carried out with the help of appropriate electronic or optical sensors or software tools known to the person skilled in the art. Should the test result in expiry of the device, the system cannot be started and/or the device cannot be used and/or an error message may be displayed.

A further control may involve the checking of repeated use of the device. The checking may be carried out with the help of appropriate electronic or optical sensors or software tools known to the person skilled in the art. Should the test result in a previous use of the device, the system cannot be started and/or the device cannot be used and/or an error message may be displayed.

A further control may involve the checking of communication or connection between the system application and a controller board. The checking may be carried out with the help of appropriate electronic or software tools known to the person skilled in the art. Should the test result in an inaccurate communication or connection between the system application and a controller board, the system cannot be started and/or the device cannot be used and/or an error message may be displayed.

A further control may involve the checking of storage capacity, in particular minimum storage capacity on the device assessment system. The checking may be carried out, e.g. with the help of appropriate software as known to the person skilled in the art. Should the test result in an inaccurate or insufficient storage capacity, the user may be prompted to delete files on the system and/or the device may be stopped.

A further control may involve the checking of date plausibility on the device assessment system. The checking may be carried out, e.g. with the help of appropriate software as known to the person skilled in the art. Should the test result in an inaccurate date or a date younger than the date of the last software update, the user may be prompted to check the system and/or to input the current date and time and/or the device may be stopped.

A further control may involve the checking of the device temperature. The checking may be carried out, e.g. with the help of appropriate physical or electronic temperature measuring instruments as known to the person skilled in the art. Should the test result in an inaccurate temperature, the user may be prompted to switch off the device or the device may be stopped.

A further control may involve the checking of the contact of a pressure tube pump by adjusting the tube pump roll to ensure that the tube is squeezed with a defined force. The checking may be carried out, e.g. with the help of appropriate mechanical, optical or electrical/electronic sensors as known to the person skilled in the art. Should the test result in an inaccurate function of the pressure tube pump the device may be stopped and/or the test(s) may be marked as invalid.

A further control may involve the validation of the homogeneity of the image at an exposure control position. The checking may be carried out with the help of appropriate statistical or software tools known to the person skilled in the art based on an analysis of a histogram or a limitation of the width of the histogram. Should the test result in an inaccurate homogeneity of the image at an exposure control position, the assay results may be indicated as invalid and/or a repetition of the assay may be initiated.

A further control may involve the validation of the location and/or stability of the optical axis and/or red-green correspondencies. The validation may be carried out by comparing correspondencies in bead images as described herein above with calibrated correspondencies. The location and/or stability of the optical axis and/or red-green correspondencies may be considered as valid if the comparison yields an offset of between about 0 to 20 pixels, e.g. 10 or 5 pixels. Should the validation result in an invalid location and/or stability of the optical axis and/or invalid red-green correspondencies, the assay results may be indicated as invalid and/or a repetition of the assay may be initiated.

A further control may involve the testing of particle movement in a microfluidic channel, e.g. the movement of cells such as blood cells in the microfluidic channel. The checking may be carried out with the help of appropriate electric, electronic or optical sensors known to the person skilled in the art. E.g., for performing the control a first image may be taken and after a predefined interim a further image may be taken, the interim being between about 0.1 sec to 2 min, e.g. 0.3 sec. Both images may subsequently be compared and the movement of particles may be determined in pixels or pixels per time unit, e.g. pixels per sec. A particle movement in microfluidic channel may be considered as acceptable if the comparison yields an offset of not more 20 pixels per second, e.g. 20 pixels per second, 15 pixels per second, 10 pixels per second, 5 pixels per second, 3 pixels per second for the same particle in both images. Should the comparison result in a cell movement beyond the threshold values, the assay results may be indicated as invalid and/or a repetition of the assay may be initiated. A control may involve the checking of the focus of the scanning unit of a device or system as described herein by detecting optically distinguishable beads present in the microfluidic channel.

The term "bead" may denote a physical chemical or biological entity. Typical beads may be latex or polystyrene beads. Such bead may, for example, comprise a specific antigen, typically on its surface. The bead is further fluorescently labeled as described herein above.

An optically detectable bead is a bead which is distinguishable from its surrounding. The bead may, for example, be labeled, e.g. with a dye, a coupled dye or any other suitable distinguishing entity or comprise other optical distinguishing characteristics, e.g. a different reflection, absorption, excitation or fluorescence behavior etc.

The beads may be immobilized in the microfluidic channel by chemical or mechanical binding to the channel surface. For instance, the beads may be bound by covalent chemical binding to the channel surface or by the use of mechanical interaction due to interlocking units. The beads may not be movable or removable by liquid flow through the channel. The beads may be labeled with a fluorescent label as defined herein above. The beads may have any suitable form or be of any suitable type know to the person skilled in the art. Examples of such beads are latex beads labeled with a fluorescent dye. The label used for the labeling of the beads may be the same label used for the labeling of compounds being able to bind to analytes or samples as described herein, e.g. antibodies or ligands etc. as defined herein above, or alternatively a different label. The emitted wavelength after excitation may be identical or different in comparison to the wavelength emitted by labels associated with or binding to analytes or samples to be examined. The emitted light may be stronger than the light emitted from labels associated with or binding to analytes or samples to be examined. The emitted light may accordingly be detected based on a shorter exposure time. The number and localisation of beads and the intensity of light emission of the beads may be known and/or predefined. By comparing these parameters or by comparing these parameters with a predefined or threshold value after an autofocus process has been finished it may be verified whether the scanning unit is in focus. Should the test result in an inaccurate focus of the scanning unit the device may be stopped and/or the test(s) may be marked as invalid and/or a repetition of the assay may be initiated.

The method may comprise checking the focus of a detection unit of a system or associated with a device, wherein said system or device comprises one or more optically detectable particles or beads being immobilized within a microfluidic channel, and adjusting the focus if necessary; adjusting the exposure time for the detection unit; optically detecting the one or more particles or beads in a predefined area of the micro fluidic channel; determining a first value indicative for number of particles in said area; and determining a second value indicative for the usability of the device or system and/or of any procedure, function or method carried out with or in said device or system, based on a comparison of the first value with a threshold value.

The checking of the focus of a detection unit is typically a comparison of one of more parameters with suitable threshold or predefined values. Such parameters are the conversion of light from object points. Such a conversion may, for instance, be determined by circle of confusion criteria as known to the person skilled in the art. An object or image point may accordingly be considered as being in focus if light is converged almost as much as possible based on circle of confusion criteria. If these criteria are not met, the focus may be adjusted. This may be done automatically, e.g. with the help of electronic or mechanical devices, typically in the form of autofocussing on an object. Suitable techniques, devices, or calculation methods etc. are known to the person skilled in the art. Alternatively, the focus may be adjusted manually. A detection unit may be comprised in a system, e.g. a system for performing assays such as biological, medical, chemical, biochemical assays, cell counting etc. or may be associated with a device wherein assays may be performed such as biological medical, chemical, biochemical assays, cell counting etc. The detection unit may be comprised in a system as mentioned herein above. The detection unit may be associated with a device as mentioned herein above.

The exposure time for the detection unit may be adjusted according to the amount and intensity of light reaching the detection unit, e.g. in reaction to the depth of image field, the distance range over which objects are acceptably sharp or in focus or any other suitable parameter known to the person skilled in the art. The adjustment may be carried out automatically, e.g. with the help of electronic or mechanical devices, typically in the form of an automated comparison to a lookup table. Suitable techniques, devices, lookup tables for threshold values etc. are known to the person skilled in the art. Alternatively, the exposure time may be adjusted manually.

A value indicative for the number of particles or beads may be compared to a threshold value or lookup table. If, for example, the indicative number of beads or particles is zero, i.e. no bead or particle is detectable, the device or system and/or any procedure, function or method carried out with or in said device system may be considered as non-usable. Alternatively, if, for example, the value indicative for the number of beads or particles is much larger than the predefined value or the threshold value, e.g. larger than 100.000, i.e. too many beads or particles are detectable, the device or system and/or any procedure, function or method carried out with or in said device system may also be considered as non-usable. Otherwise, i.e. if the value is within a threshold range, e.g. as indicated above, the device or system and/or any procedure, function or method carried out with or in said device system may also be considered as usable and/or be confirmed.

If a non-usability situation is encountered in this context the usage of the device or system may be discontinued and/or any results obtained may be disregarded. Corresponding information may be recorded electronically or encoded in a barcode or any other suitable coding material. Such a barcode may, for instance, be attached to a device or microfluidic channel.

Additionally or alternatively, encountering a non-usability situation may lead to one or more adjustment reactions. The adjustment reactions may be determined in reaction to the number value indicative for the number of particles. If, for example, no beads or particles are detected, the focus of the detection system may be adjusted or further adjusted if it was already adjusted before. The adjustment may be accomplished by a variation of the distance between the detection system and the the microfluidic channel comprising the particles, e.g. by using increments of 0.01, 0.05, 0.5, 0.75, 0.8, 0.9, 1.0, 1.1, 1.2, 1.5, 2, 3, 4, 5, 10, 20, 50 or 100 µm or any other suitable increment which may depend on the nature, size and form of the detection unit used. Such a modification may be reiterated one or several times, followed or preceded by the other method steps as described herein. Furthermore, the exposure time may be adjusted or further adjusted if it was already adjusted before. The exposure time may, for example, be increased or decreased by about 10, 20, 30, 50, 100, 200, 500, 1000 or 10.000%. Such a modification may be reiterated one or several times, followed or preceded by the other method steps as described herein.

A reiteration of additional adjustments of the focus, predefined area and/or exposure time may be carried out for each of the parameters of focus, predefined area and exposure time independently or for a combination of parameters. Such a reiteration may be carried out for 1 to about 20 times, e.g. 2, 3, 4, 5, 6, 7, 8, 9, 10 times.

If, after a reiteration of additional adjustments, a non-usability situation prevails the usage of the device or system may be discontinued and/or any results obtained may be disregarded.

If, on the other hand, a comparison of a value indicative for the usability of the device or system is within a predefined range the device or system may be continued to be used and/or the results obtained or to be obtained with said device or system may be confirmed.

The methods may accordingly be carried out before or after carrying out an assay as described herein. Alternatively, the method may be carried out during the performance of an assay as described herein.

The steps of the method mentioned above may be carried out in a different order, e.g. first a value indicative for the number of particles in an area may be determined, subsequently a value indicative for the usability may be determined. If at this stage a non-usability situation is encountered the focus may be checked and/or adjusted and/or the exposure time may be adjusted and/or the area of optical detection may be adjusted as described herein above.

The threshold value for controlling the focus position may be for instance the detection of minimum number of 3 particles as lower limit and about 10.000 particles as upper limit, for instance 5, 10, 50, 100 or 500 particles or beads. If the second value indicative for the usability of the device or system and/or of any procedure, function or method carried out with or in the device or system is a deviation of not more than 40%, 35%, 30%, 25%, 20%, 15%, 12%, 11%,10%, 9%, 8%, 7%, 6%, 5%, 4%, 3%, 2% or 1% between the first value, i.e. the value indicative of the number of beads or particles in a predefined area of the microfluidic channel and the threshold value of 3 particles or about 10.000 particles, the test may be considered as being usable and/or any procedure, function or method carried out with or in the device or system may be confirmed. If a concomitant assay is carried out, corresponding images may be taken and/or recorded and/or further processed according to the particulars of the assays as described herein above or below.

If the second value indicative for the usability of the device or system and/or of any procedure, function or method carried out with or in the device or system is a deviation of more than about 40%, 35%, 30%, 25%, 20%, 15%, 12%, 11 %,10%, 9%, 8%, 7%, 6%, 5%, 4%, 3%, 2% or 1% between the first value, i.e. the value indicative of the number of particles in a predefined area of the microfluidic channel and the threshold value of 3 particles or about 10.000 particles, the test may be regarded as being non-usable. The device or system may be regarded as non-usable and/or any procedure, function, test or method carried out with or in the device or system may be considered as inaccurate. The test or usage of the device or system may accordingly be discontinued and/or the results obtained may be disregarded.

A control element may include a means for determining of a fluorescence background in the microfluidic channel. The term "means for determining a fluorescence background" relates to optical and/or electronic sensor or measurement systems as well as appropriate image analysis software which allow the detection of fluorescence signals in zones or areas of the microfluidic channel, in which no analyte- or particle-associated emission is detectable. Labeling reactions etc. have been described in the context of the testing of the labeling reactions herein above.

Any obtained value may subsequently be used for a subtraction of the background fluorescence from the measured analyte-associated emissions in order to allow a normalization of the signals and to improve the accuracy of the measurement.

A further control may involve the checking of the focus range of the scanning unit of a device or system as described herein by detecting optically distinguishable beads present in the microfluidic channel as defined herein above. The checking may be carried out by determining whether the focus position is at the edges of the operating range of the autofocus servo. Should the test result in an inaccurate focus range of the scanning unit the use of the device may be stopped and/or the test(s) may be marked as invalid and/or a repetition of the assay may be initiated.

A further control may involve the checking of the exposure time for the detection of light emission. The test may be carried out by verifying whether automatically adapted exposure times lead to exposure times that a within a predefined range. Should the test result in an inaccurate exposure time, the use of the device may be stopped and/or the test(s) may be marked as invalid and/or a repetition of the assay may be initiated.

A further control may involve the checking of image homogeneity, e.g. of images taken during assays or control runs. The checking may be carried out by generating histograms based on image data, an analysis of the histograms and a comparison of the obtained analysis values with a reference or look-up table. Should the test result in an inaccurate image homogeneity, i.e. strong image homogeneity, the use of the device may be stopped and/or the test(s) may be marked as invalid and/or a repetition of the assay may be initiated.

A further control may involve the checking of channel intensity gradients. The checking may be carried out with the help of suitable optical, electronic or software tools known to the person skilled in the art. Should the test result in an inaccurate intensity gradient within the device, i.e. a strong intensity gradient within the device, use of the device may be stopped and/or the test(s) may be marked as invalid and/or a repetition of the assay may be initiated.

A further control may involve the checking of gating. The checking may be carried out with the help of suitable optical, electronic or software tools known to the person skilled in the art in order to perform dynamic gating. Should the test result in an inaccurate gating, i.e. a only false positive, but no true positive distribution, the use of the device may be stopped and/or the test(s) may be marked as invalid and/or a repetition of the assay may be initiated.

A means for the detecting the filling of the microfluidic channel may be provided. Typically, such means are optical or electronic sensors, e.g. a CCD camera, a light barrier and the like, connected to a suitable computer system and image processing software as known to the person skilled in the art which allow monitoring channel openings. A corresponding control may be carried out by validating the outflow hole of a microfluidic channel via the comparison of the properties of images of the outflow hole. These properties may change when the hole is filled in comparison to an empty hole. Should the test result in an inaccurate filling of the microfluidic channel the use of the device may be stopped and/or the test(s) may be marked as invalid and/or a repetition of the assay may be initiated.

A further control may involve the testing of the filling of device compartments or sub-units with the help of optical or electronic sensors, e.g. CCD camera and the like, connected to a suitable computer system and image processing software as known to the person skilled in the art which allow monitoring channel openings. A corresponding control may be carried out by validating the liquid level of device compartments or sub-units via the comparison of the properties of images obtained from the device compartments or sub-units. These properties may change when the device compartment or sub-unit is filled in comparison to not filled or not entirely filled device compartment or sub-unit. Should the test result in an inaccurate filling of the device compartment or sub-unit the use of the device may be stopped and/or the test(s) may be marked as invalid and/or a repetition of the assay may be initiated.

A further control may involve an outlier analysis of images obtained by using the device or system as described herein. The control may be based on the assessment of all or the majority of images obtained during one or more use cycles for outlier images. The assessment may be based on interquartile ranges with the following parameters: (Q1-1.5*IQR)<feature value<(Q3+1.5*IQR). Should the analysis result in an inaccurate outlier analysis value the use of the device may be stopped and/or the test(s) and/or the image(s) may be marked as invalid and/or a repetition of the assay may be initiated.

A further control may involve the testing of image intensities by assessing the minimum intensity of red and green color channels. The checking may be carried out, e.g. with the help of appropriate optical and/or electronic sensors or measuring instruments as known to the person skilled in the art. Should the analysis result in inaccurate image intensities in the red and/or green channel the use of the device may be stopped and/or the test(s) and/or the image(s) may be marked as invalid and/or a repetition of the assay may be initiated.

A further control may involve the testing of volume present in the microfluidic channel by using appropriate optical, mechanical and/or electric/electronic sensors or measuring instruments as known to the person skilled in the art. The volume may be in a range from 0.1 to 5 µl, 0.5 to 3 µl, 1 to 2 µl or above 1.25 µl. The liquid to be measured may be blood. Should the analysis result in inaccurate volume present in the microfluidic channel, the use of the device may be stopped and/or the test(s) may be marked as invalid and/or a repetition of the assay may be initiated.

The volume tested or check as described above may be cross-calculated with the help of a means for determining the volume of the detection channel. Such a means may, for example, be a bar-code or other digitalized readable information tag present on a device or system, which indicates a volume factor or a deviation from a predefined volume for the microfluidic channel. Is, for example, the real microfluidic channel volume different from a typical volume predefined for a microfluidic channel, this information may be derived from a barcode or digitalized readable information tag present on a device or system and used for an adjusted assessment of volume values obtained by a testing procedure as described herein above. Furthermore, the information on the exact volume of the individual microfluidic channels may be used for a very accurate determination of analyte concentration in the sample to be examined, since no average volume values are to be used, but individually determined values. Thereby the exactitude and fidelity of the determination method may be significantly increased.

The term "inaccurate" as used herein means that the measured value for movements, positions, presence of items or signals etc. deviate from a predefined or known value or range of values or a value or range of values indicated as being permissible herein above by at least 0.5%, 1%, 2%, 3%, 4%, 5% %, 6%, 7%, 8%, 9%, 10%, 15%, 20%, inter alia depending on the kind of control. E.g., a value for the expiration date is deemed to be inaccurate if the deviation is more than 0%.

Any of the above mentioned control activities or uses of control elements may be included in method steps as defined herein above or below. For instance a detection method as defined herein or in the claims may comprise additionally any of the control steps mentioned above.

The control elements and/or controlling activities may also be used within or for the testing of capillaries or capillary structures as defined herein above. For instance, the charge and structure of the matrix in the capillary may be tested in accordance with a testing scheme for the filling of device compartments as defined herein above.

A device or system as described herein, for instance a test cartridge, may be asymmetric, e.g. by having specific alignment structures like asymmetric holes, cropped angels, preferably one, two, or three cropped angles. The asymmetry of the device may be used in order to eliminate misusage or malpositioning of the device with respect to, e.g. a scanning system. Typically, the device may only be entered into the scanning system if properly placed, i.e. if the asymmetry is detected by the scanning device. The asymmetrical elements of the device may be adapted to the form and format of scanning devices known to the person skilled in the art.

A sample, e.g. of blood, to be analyzed may be obtained from a patient through a standard fingerstick or venous blood draw. Fingerstick blood may be applied directly to a device or be applied to a capillary inlet or structure, which may be subsequently connected with the device or system as described herein. A small sample volume is preferred for fingerstick use, since it may avoid the possibility of under-filling the receptacle structure, e.g. a capillary in the sample port. Excess liquid may not necessarily be wiped off the capillary. Alternatively, venous blood may be applied to the device by using a pipette. Preferably, fingerstick samples are applied immediately to the cartridge. When obtaining a sample, e.g. of blood, the first sample, e.g. blood drop may be wiped off and the second sample, e.g. blood drop may be obtained without any squeezing

After applying the sample, the cap may be snapped into place, in order to eliminate the chance of sample spillage or contamination of the instrument.

A method comprises placing lens, e.g. an optical lens, at a first distance and at a first position with respect to a microfluidic channel, which may be arranged in a device or system or be a microfluidic channel of a device or system, wherein the microfluidic channel comprises a liquid sample and one or more optically detectable beads or particles immobilized within a microfluidic channel; taking a first image of at least a subset of said immobilized beads or particles; analyzing at least one parameter of said first image; based on said at least one parameter, placing the lens at a second distance and at the first position with respect to the microfluidic channel; taking a further image of at least a subset of said immobilized beads or particles; determining a first value indicative for the number of beads or particles in said second image; determining a second value indicative for the difference between said first value and a threshold value, and, depending on said second value taking at the second distance an image of at least a second position of the microfluidic channel or creating an error message. The creation of an error message may lead to a discontinuation of usage of said device or system and/or a disregard of results obtained with said device or system. A "distance" as used herein refers to a predefined distance between the lens and the object to be detected, e.g. a default distance typical for an optical system. Such a default distance may, for example, be the maximal distance between the lens and the object, which is technically possible. Alternatively, the default distance may be the minimal distance between the lens and the object, which is technically possible. A "parameter" as mentioned in the context of the method may be, for example, contrast, intensity, maximum edge contrast, the number of bright elements surrounded by dark field, or the number of dark elements surrounded by bright fields, the presence of edgings or optical fissures or fractions, the presence of round or oval entities, the sharpness of the image or any other suitable parameter known to the person skilled in the art The parameters may either be analyzed alone, or any grouping or combination of parameters may be analyzed. If, for instance, the maximum edge contrast of the image is analyzed as parameter, the obtained analysis result may be used in order to decide on a variation of the distance of the lens with respect to the particle or microfluidic channel comprising the particle. The distance may either be increased or decreased, depending for instance on the default distance used in the previous placing step. The increase or decrease of distance may be done in increments of 1, 2, 3, 4, 5, 6, 7, 8, 9 or 10% of the default distance, or in increments of 0.01, 0.05, 0.5, 0.75, 0.8, 0.9, 1.0, 1.1, 1.2, 1.5, 2, 3, 4, 5, 10, 20, 50 or 100 µm or any other suitable increment which may depend on the nature, size and form of the lens or detection unit used. The increments may be varied during repetitive rounds of adjustment. E.g. the increments may become smaller during every reiteration round, or during every 2^{nd}, 3^{rd}, 4^{th}, 5^{th}, etc. reiteration round.

Furthermore, the parameter analyzed may be compared to a lookup table or reference database. Based on this comparison a decision on the increase or decrease may be taken and/or a decision on the amount of increase or decrease may be taken. The above mentioned steps may be reiterated one or several times, e.g. up to 20 times. Furthermore, during the reiterations one or more images may be taken, saved and/or analyzed or further processed. Upon one or more variations of the distance a further image of immobilized particles may be taken and a first value indicative of the number of beads or particles in the image may be determined. The value indicative for the number may be determined, for example, for a predetermined area as defined herein above. A value indicative for the number of particles may be compared to a threshold value or lookup table, resulting in a second value indicative for the difference between the first value and the threshold value, e.g. as described herein above. If a value indicative of the number of particles is outside a range of threshold values as defined herein above, the device or system and/or any procedure, function or method carried out with or in said device system may be considered as non-usable. If a value indicative of the number of particles is within a range of threshold values as defined herein above, an image at the second or further distance which resulted in such a matching of the threshold values may be taken, saved and/or further processed, e.g. if additional assay steps are carried out, e.g. those mentioned herein above or below

The first and the second distance may be essentially the same, i.e. the first and the second image may be taken at the same distance between the lens and the microfluidic channel. Instead of the variation of distance, the exposure time for the detection may be varied or a predefined area to be analyzed may be modified. A predefined area of the micofluidic channel may have, for example the size of about 0.001%, 0.05%, 0.1%, 0.5%, 1%, 5%, 10%, 20%, 30%, 40%, 50%, 60%, 70%, 80%, 90% or 100% of the microfluidic channel. It may be enlarged or shrunk and/or adjusted in accordance with the type, size, optical density, fluorescence, labelling etc. of the particle to be detected. E.g. the predefined area may be enlarged and/or shrunk by about 10, 20, 30, 50, 100, 200, 500, 1000 or 10.000%.

A method may comprise obtaining an image of at least one position of a microfluidic channel comprised in a device or system; introducing a sample into the microfluidic channel; obtaining a further image of the at least one position of a microfluidic channel; analyzing one or more parameters of the images; and calculating a value indicative for the presence of a sample in the microfluidic channel and/or the usability of the device or system and/or of any procedure, function or method carried out with or in said device or system, based on the analyzed parameters. The position may be variable or moveable, depending on, e.g. the detection or scanning unit or system employed. Typically, a position at the opposite of the site where the sample is introduced, e.g. at the exit or outflow hole may be chosen. A sample to be introduced may be any suitable sample, typically a liquid sample comprising particles or analytes to be examined. The sample may be introduced in the form a predefined volume, e.g. 5µl, 10µl, 15µl, 20µl etc. or it may be introduced in correspondence with the filling status of the micro fluidic channel, e.g. to completely fill the microfluidic channel, to fill it for 75%, 50%, 30% etc. The filling status may be correlated and/or controlled via a feedback loop with the further analysis steps as described herein below: after the introduction of a sample a further image is obtained. Subsequently, both images, one taken before the introduction of a sample and one taken after the introduction of a sample may be analyzed and compared with respect to parameters like the contrast of the image, the brightness of the image, the distribution of brightness over the image. Typically, the grey values in the image are determined and compared between the images taken. Subsequently, a value indicative for the presence of a sample in the microfluidic channel and/or the usability of the device or system and/or of any procedure, function or method carried out with or in said device or system may be determined, based on the analyzed parameter, e.g. the grey values.

As a threshold for deciding for whether a sample is present in a microfluidic channel and/or whether the device or system is usable and/or whether any procedure, function or method carried out with or in the device or system is valid, the analyzed parameter may be increased by more than about 5% e.g. by about 5%, 10%, 20%, 30%, 40%, 50%, 60%, 70%, 80%, 90%,95%, 100% or more than 100% between the image taken before the introduction of the sample and the further image taken after the introduction of the sample. The image after the introduction of the sample may be brighter than the image taken before the introduction of the sample. The analyzed parameter may be calculated, for example, as average value over all pixels of an image. In this situation the usage of the device or system may be continued and/or results obtained with the device or system may be confirmed.

Conversely, if the analyzed parameter may be increased by less than about 5 %, less than about 10%, less than about 20%, less than about 30%, or less than about 50% between the image taken before the introduction of the sample and the further image taken after the introduction of the sample it may be considered that no sample is present in the microfluidic channel and/or that the device or system is non-usable and/or that any procedure, function or method carried out with or in the device or system is invalid. In this situation the use of the device or system may be discontinued and/or the results obtained with the device or system may be disregarded.

The parameter to be analyzed may be the grey value, e.g. the 50^{th} to 95^{th} percentile of the grey values. Optionally, the 90^{th} percentile of the grey values may be used as parameter to be analyzed. The term "grey value" as used herein refers any suitable measurement of pixel intensities, e.g. to a range of 256 grey values, e.g. according to a true color graphics definition.

The methods may be carried out in parallel to assays and methods as described herein above or below. Thereby a concomitant reviewing process for the quality of the obtained assay results via internal controls becomes possible.

Any of the above mentioned methods allowing the control of optical parameters, the control of the filling status of a microfluidic channel or the testing of the quality of the labeling reagent and the interaction between the reagent and the particle may be combined in any suitable manner. E.g. first the filling status may be checked, followed by the controlling of optical parameters and finally followed by the employment of a quality check for the labeling reagent. Furthermore, any other combination of methods is also envisaged.

Furthermore, the methods may be combined with additional control methods, method steps, checking steps, testing steps, validation steps or the like, e.g. for the hardware of the system or device, software components connected to the system or associated with the device or additional parameters associated with assay steps or features of the device or system, e.g. control methods, method steps, checking steps, testing steps, validation steps etc. as defined herein above.

For example, at least one of the following control methods, controls, control steps, checking steps, testing steps or procedures or any combination or subgrouping thereof may be carried out in combination with any of the above described methods:
a control involving the testing of labeling reactions and/or the presence of cells in a sample to be analyzed with the help of immobilized particles, e.g. immobilized cells, as described herein above;
a control involving the checking of the detection, e.g. cell count plausibility on the device or assessment system as described herein above;
a control directed to the testing of the device with respect to a scanning or detection unit, i.e. checking whether the device is inserted or inside of a system or properly associated with a scanning or detection unit as described herein above;
a control directed to the testing of a motor of the system or associated with device as described herein above;
a movement control of the motor which may be carried out by testing the smooth running on all axes of the device or system, in particular, the smooth running of trays and rolls as described herein above;
a control involving the checking of current overload of the motor as described herein above;
a control involving the checking of LED currents, in particular the testing of emitted light intensity as described herein above;
a control involving the checking of filter element positions and changeability by assessing the centering of the filter elements along the optical axis as described herein above;
a control involving the checking of hardware elements and/or the device by assessing start- and stop-bits as described herein above;
a control involving the checking of barcodes on a device by assessing parity values as described herein above;
a control involving the checking of power supply voltage as described herein above;
a control involving the checking of the battery or accumulator charge, in particular the minimum battery or accumulator charge, as described herein above;
a control involving the checking of the end-to-end filling of a capillary, e.g. a control to determine whether at least 50%, 60%, 70% or 80% of a capillary are filled, as described herein above;
a control involving the establishment of database connection of the system, as described herein above;
a control involving the testing of the connection status during the system startup, as described herein above;
a control involving the testing of an imager module connection status during the system startup, as described herein above;
a control involving the testing of a movement of the tray to the loading position during the system startup, as described herein above;
a control involving the testing of visualization performance during the system startup, as described herein above;
a control involving the testing of communication between system application and a camera, as described herein above;
a control involving the testing of the functionality of input buttons of the system, as described herein above;
a control involving the testing of the functionality of save settings, as described herein above;
a control involving the testing of the display of available results, as described herein above;
a control involving the testing of the visualization of available results, as described herein above;
a control involving the checking of data removal, as described herein above;
a control involving the checking of data editing, as described herein above;
a control involving the checking of the device type and/or version and/or its compatibility with the system, as described herein above;
a control involving the checking of the expiry data of the device barcode with respect to the data provided in the system, as described herein above;
a control involving the checking of repeated use of the device, as described herein above;
a control involving the checking of communication or connection between the system application and a controller board, as described herein above;
a control involving the checking of storage capacity, in particular minimum storage capacity on the device assessment system, as described herein above;
a control involving the checking of date plausibility on the device assessment system as described herein above;
a control involving the checking of the device temperature, as described herein above;
a control involving the checking of the contact of a pressure tube pump by adjusting the tube pump roll to ensure that the tube is squeezed with a defined force, as described herein above;
a control involving the validation of the homogeneity of the image at an exposure control position, as described herein above;
a control involving the validation of the location and/or stability of the optical axis and/or red-green correspondencies, as described herein above;
a control involving the testing of particle movement in a micro fluidic channel, e.g. the movement of cells such as blood cells in the microfluidic channel, as described herein above;
a control involving the checking of the focus of the scanning unit of a device or system by detecting optically distinguishable beads present in the microfluidic channel as described herein above;
a control involving the determining of a fluorescence background in the microfluidic channel as described herein above;
a control involving the checking of the focus range of the scanning unit of a device or system by detecting optically distinguishable beads present in the microfluidic channel as defined herein above;
a control involving the checking of the exposure time for the detection of light emission;
a control involving the checking of image homogeneity, e.g. of images taken during assays or control runs, as described herein above;
a control involving the checking of channel intensity gradients, as described herein above;
a control involving the checking of gating, as described herein above;
a control involving the detecting the filling of the microfluidic channel as described herein above;
a control involving the testing of the filling of device compartments or sub-units, as described herein above;
a control involving an outlier analysis of images obtained by using the device or system, as described herein above;
a control involving the testing of image intensities by assessing the minimum intensity of red and green color channels, as described herein above; and/or
a control involving the testing of volume present in the microfluidic channel, as described herein above. The method as defined herein may comprise at least one of the following steps: controlling the presence of a device within or with respect to a detection unit of a system; determining a fluorescence background in the microfluidic channel of the device or system; determining a target counting plausibility, e.g. via the detection of certain target particles in the device or system; controlling the movability of the device within the detection unit of the system; controlling of accumulator charge, date plausibility and/or temperature in the device or system; and/or controlling of software parameters of the system. Corresponding procedures, testings, validation steps etc. are described herein above.

The method may comprise introducing a liquid sample into a microfluidic channel, e.g. arranged in a device or system, wherein the microfluidic channel comprises the liquid sample comprising multiple particles, and wherein said microfluidic channel comprises and/or is associated with a control element; forming a mixture comprising at least a portion of the liquid sample and an optical label; forming multiple complexes, each complex comprising one of the multiple particles and at least one of the optical labels, detecting complexes present within a subset of the mixture, performing a control procedure comprising determining a value based on the control element and comparing the value with a predefined value, wherein a matching of both values or a deviation between both values of less than about 30% indicates the usability of the microfluidic channel, device or system and/or of any procedure, function or method carried out with or in said microfluidic channel, device or system, leading to a continuation of usage of said microfluidic channel, device or system and/or a confirmation of results obtained with said microfluidic channel, device or system, and wherein a deviation between both values of more than about 30% indicates the non-usability of the microfluidic channel, the device or system and/or of any procedure or method carried out with or in said microfluidic channel, device or system, leading to a discontinuation of usage of said device or system and/or a disregard of results obtained with said microfluidic channel, device or system. The term "control element" refers to control elements as described herein.

Performing a control procedure comprising determining a value based on the control element and comparing the value with a predefined value may include performing one or more control methods, checks, validations etc. as described herein. These checks may be carried out according to parameters as described herein. The comparison with a predefined value may refer to a comparison to one or more reference values as indicated herein, in particular to the definition of inaccurate results provided herein. System or device reactions the indication of messages etc. may be in accordance with the specific indications of the control methods described herein. The checks may be carried out in any suitable order or any suitable time-frame, e.g. before, during or after an assay is analyzed in a system or device. The checks may also timely overlap or be performed in a non-overlapping sequence. Similar checks may also be performed together. If the result of one checking is necessary for the performance of a subsequent checking, the corresponding order is to be maintained.

A control procedure may be a control method as mentioned herein, e.g. a method allowing the control of optical parameters, the control of the filling status of a microfluidic channel or the testing of the quality and/or activity of the labeling reagent and the interaction between the reagent and the particle. These methods may also be combined in any suitable manner with the above mentioned checks.

A device as mentioned in the methods allowing the control of parameters of the device, the software and/or the assay such as e.g. of optical parameters, the control of the filling status of a microfluidic channel or the testing of the quality of the labeling reagent and the interaction between the reagent and the particle may be a device as described herein, e.g. a device having one or more of the features defined herein.

A system as mentioned in the above described methods allowing the control of parameters of the device, the software and/or the assay, such as e.g. of optical parameters, the control of the filling status of a microfluidic channel or the testing of the quality of the labeling reagent and the interaction between the reagent and the particle may be a system as described herein, e.g. a system having one or more of the features defined herein.

Any of the above described methods allowing the control of parameters of the device, the software and/or the assay, such as e.g. of optical parameters, the control of the filling status of a microfluidic channel or the testing of the quality of the labeling reagent and the interaction between the reagent and the particle, or the method allowing the performance of assays in combination with control procedures, may comprise a step of detecting complexes allowing a conclusion on a viral infection or the status of a viral infection. A viral infection may be the presence of one or more viruses in an organism, e.g. a mammal, a human being etc. Optionally, a viral infection is an infection with any of known viruses, e.g. an infection with a retrovirus, such as e.g. a virus of the genus Alpharetrovirus; e.g. Avian leukosis virus, or Rous sarcoma virus, the genus Betaretrovirus, e.g. Mouse mammary tumour virus, the genus Gammaretrovirus, e.g. Murine leukemia virus or Feline leukemia virus, the genus Deltaretrovirus, e.g. Bovine leukemia virus or Human T-lymphotropic virus, the genus Epsilonretrovirus, e.g. Walleye dermal sarcoma virus, the genus Lentivirus, e.g. Human immunodeficiency virus (HIV), Simian or Feline immunodeficiency viruses, or the genus Spumavirus, e.g. Simian foamy virus. The term "HIV" includes any known or yet to be identified species of Human immunodeficiency virus, e.g. HIV-1 or HIV-2.

The devices as described herein, the systems as described herein, the methods as described herein and/or the capillary as described herein may be used for the detection diagnosis or monitoring of a viral infection, e.g. a retroviral infection. The devices, systems or capillaries may, for instance, be provided with reagents binding to particles which allow a conclusion on the infection of an organism, e.g. a mammal, or a human being with a virus, e.g. a retrovirus as defined herein above, in particular HIV. Such reagents may, for instance, be antibodies specifically binding to T-cells as described herein. The methods may accordingly be modified or implemented, i.e. corresponding reagents etc. may be used.

Detection may be carried out by determining the number and/or nature and/or form etc. of indicative cells such as T-cells. A diagnosis may include further methods or procedures like a PCR detection of viral genes or gene fragments, e.g. HIV genes, an immunological test of viral presence in the organism or any other suitable method known to the person skilled in the art. Monitoring the status of a disease or an infection may include a repetition of a detection step as defined herein, e.g. during a defined period of time, e.g. one to several days, one to several weeks, e.g. 2, 4, 5, 6, 7, 8, 9, 10 weeks, one to several month, e.g. 1, 2, 3, 4, 5, 6, 7, 8, 9, 10, 12 months, one to several years, e.g. 1. 2, 3, 4, 5, 6, 7, 8, 9, 10 or more years. The monitoring may be carried out during a treatment procedure, e.g. an antiviral therapy, e.g. an anti-HIV therapy. The methods may include methods of data acquisition, without conclusion step on the presence of an infection or disease.

Any such method or procedure(s) may be carried out in vivo, i.e. in or at the human or animal body, or ex vivo, i.e. in vitro, e.g. by using samples, e.g. blood samples obtained from a patient. Such samples may be obtained according to any suitable method known to the person skilled in the art.

Methods and devices for performing assays have been described. Examples are discussed next.

While inlet 106 in Figures 1 and 2 has been described as an unobstructed opening, other configurations are possible. For example, an inlet may be configured with a syringe fitting (e.g., a gas-tight fitting) to receive a syringe. Alternatively, an inlet may be configured as a gasket through which a sample may be introduced by a needle. As another alternative, the inlet may be fitted with a one-way valve that allows sample to be introduced but not to exit. As another alternative, the inlet may be configured to receive a standard capillary (e.g., an end-to-end capillary such as a plastic capillary). The capillary may be anti-coagulant coated such as with heparin. Examples of suitable capillaries include 20µl heparin coated capillaries available from Kabe Labortechnik (Nürnbrecht-Elsenroth, Deutschland; http://www.kabe-labortechnik.de/index.php? sprache=de&akt_seite=startseite_produkte.php).

While a micro fluidic device has been described that fills by capillary action, other devices can be used. For example, system 500 can be designed to reduce an internal volume of the micro fluidic network prior to application of the sample to the inlet. When the sample is applied, the internal volume is increased thereby drawing the sample in. Such a volume decrease can be accomplished with, for example, compression roller 516. For example, microfluidic device may be received within housing 500 so that damped spring 514 of translation actuator 512 is in a compressed state. Compression roller 516 is positioned to compress device 100 at a location corresponding to reservoir 108. This compression reduces an internal volume of reservoir 108. The volume reduction is about as great as (e.g., at least about 25% greater than, at least 50% greater than) the volume of sample to be received within device 100. With reservoir 108 in the compressed state, a volume of sample is applied to inlet 106 of device 100. Compression roller 516 is retracted away from inlet 106 toward an opposite end 137 of device 100. As roller 516 moves away from reservoir 108, the reservoir decompresses thereby increasing the internal volume of the micro fluidic network. The volume increase creates a vacuum that sucks the sample into the device.

While micro fluidic devices having an open capillary channel have been described, other devices can be used. For example, the channel may include a medium occupying at least some (e.g., most or all) of the cross section of the channel along at least a portion of its length. Typically, the medium is one which to multiple probe compounds can be immobilized to define respective spaced apart test zones (e.g., capture volumes), each having capture sites disposed in three dimensions. Pores or voids in the medium permit liquid to permeate along the channel (e.g., by capillary action). Liquid movement along the channel may be assisted by or induced by, for example, generating a vacuum within the channel as described above. Typically, probe compounds are immobilized with respect to the porous medium to define spaced-apart test zones along the channel. Interaction of analytes with probe compounds of the test zones can be determined sequentially as described for test zones 112i of device 100. Because each test zone is disposed in three dimensions, reducing the distance between the opposed inner surfaces of the channel decreases the capture volume occupied by the immobilized probe compounds of the test zone. Optical detection is performed with the test zone in the reduced volume (i.e., reduced distance) state.

While test zones 112i have been shown as elongate, other configurations are possible. For example, referring to Fig. 7, a microfluidic device 300 includes multiple test zones 312i each having a generally circular configuration. Other than a difference in shape, test zones 312i may be identical to test zones 112i of device 100. Other than a difference in test zones, devices 100 and 300 can be identical.

While a method for forming test zones 112i has been described as moving distal tip 404 and substrate 102 from an initial separation d1 (Fig. 3b) to an adjacent separation d2 (Fig. 3c) and to an intermediate separation d3 (Fig. 3d) prior to initiating lateral movement of distal tip 404 and substrate 102 (Fig. 3f), other methods can be performed. For example, distal tip 404 and substrate 102 can be moved laterally with tip 404 and substrate 102 in the adjacent separation d2. In this example, separation d2 is typically greater than zero.

While a method for forming test zones 112i has been described as including a step of maintaining distal tip 404 and substrate 102 at an intermediate separation d3 for an incubation time until only a remaining portion 402' of reagent solution 402 remains, other methods can be performed. For example, lateral movement of distal tip 404 and substrate 102 can begin immediately as distal tip 404 and substrate 102 are moved from adjacent separation d2 (Fig. 3c) to separation d3 (Fig. 3d). In other words, the incubation time may be indistinguishable from zero. As another example, during the incubation, evaporating reagent solution may be replaced with additional reagent solution introduced to the capillary tip. Accordingly, the total amount of reagent at the capillary tip increases during the incubation.

While a method for forming test zones 112i has been described as including an incubation time with distal tip 404 and substrate 102 maintained at a separation d3, other methods can be performed. For example, separation d3 can vary during the incubation time. For example, tip 404 can be oscillated laterally and or vertically relative to substrate 102 during the incubation time. Alternatively or in combination, tip 404 can be oscillated laterally and or vertically relative to substrate 102 during lateral movement. Such oscillation can enhance transport of probe molecules to the first substrate during incubation or lateral motion.

While a method for forming test zones 112i has been described as using a capillary dispenser, other dispensers may be used. For example, material may be dispensed from a solid dispenser (e.g., a solid rod).

While a method for forming test zones 112i has been described as introducing an amount of reagent solution to a distal tip of a capillary of a capillary spotter (Fig. 3b) and bringing the tip and a substrate to a smaller separation d2 so that reagent solution 402 contacts a location of substrate 102, other methods can be performed. For example, reagent solution may be introduced to the distal tip only after the distal tip and substrate are brought to a smaller separation (e.g., after the distal tip is contacted with the substrate).

While a method and microfluidic device reader for sequentially reducing a distance between inner surfaces of a channel having been described, other configurations are possible. For example, a microfluidic device reader may be configured to simultaneously reduce a distance between inner surfaces along most (e.g., substantially all or all) of a channel. Subsequently, the reader translates the detection zone of a detector along the channel so that different test zones are read sequentially.

While a microfluidic device having a first relative rigid substrate and a second relatively flexible substrate has been described, other methods can be used. For example, the substrates define both opposed inner surfaces of a channel can be flexible. Here, a portion of the optical detector can form part of the compression system. For example, the microfluidic device may translate between a compression roller and an optic of the detector.

While a reference pattern has been described as providing information related to spatial properties of test zones of a microfluidic device, the reference pattern may provide additional or alternative information. For example, a reference pattern can provide information related to physiochemical properties of test zones of a microfluidic device. Such properties include analytes for which the test zones are configured to assay. Other properties include the identity and properties of reagents stored on the device and date information (e.g., the expiration date) of the device.

While a reference pattern including magnetic indicia has been described, other indicia can be used. For example, the indicia may be formed of regions having different optical density or reflectance as compared to the surrounding material. The reference pattern reader is an optical reader typically configured to read the indicia by transmittance or reflectance.

The first substrate can include a channel formed, for example, via injection molding. The channel has a first dimension (length) substantially greater than its second and third dimensions (i.e., width and depth). The channel can have a cross section that is rectangular, V-shaped (triangular), U-shaped, or other shape. The shape and/or dimensions of the cross section of the channel can vary along the length of the channel. The second substrate can be affixed to the first substrate by an adhesive. The second substrate can be formed of, for example, a transparent tape. The second substrate (e.g., the tape) can have a mechanical stiffness, such that mechanical contact with an outer surface of the second substrate (e.g., the tape) does not substantially deform the inner surface of the second substrate.

The channel may be defined by the inner surface of a tube, a pipe a capillary or the like. The channel can have a cross section that is rectangular, V-shaped (triangular), or other shape. The shape and/or dimensions of the cross section of the channel can vary along the length of the channel. A portion of the channel may be optically transparent.

The channel may include one or more reference and/or alignment marks, such as defined structures or immobilized molecules configured to be detectable with the detection system used for the assay. The alignment marks can include, for instance, immobilized fluorescent beads, immobilized fluorescent polymers, proteins, nucleic acids and the like. Alignment marks also can include physical structures like microstructures and the like.

The device can be configured to form a fluid circuit after having introduced the sample to the channel. The fluid circuit encloses the liquid sample in an endless loop. When the liquid sample is enclosed in the fluid circuit, and the volume of the liquid sample is less than the total volume of the fluid circuit, the remaining volume in the fluid circuit can be occupied by a transport fluid. The transport fluid can be a liquid that is substantially immiscible with the sample liquid (e.g., by virtue of hydrophilicity/hydrophobicity, or differences in density). The transport fluid can be a gas, such as, for example, air. Typically, the liquid sample will be present in the fluid circuit in a continuous slug.

A portion of the fluid circuit includes a compressible zone. The compressible zone can be a length of the fluid circuit along which at least one wall of the circuit is compressible or deformable. When a localized compressive force is applied to the compressible zone, the wall deforms. Under a sufficient force, the wall can be compressed to a degree that interrupts the fluid circuit. Most commonly, the fluid circuit will be interrupted at a predetermined location, where the channel is filled with the transport fluid.

Once the fluid circuit has been interrupted, the location of the fluid sample within the fluid circuit can be manipulated by moving the location of the interruption with respect to the rest of the fluid circuit. Moving the interruption decreases the volume of the transport fluid to one side of the interruption, with a corresponding increase in volume of the transport fluid on the other side of the interruption. The changes in volume result in a differential pressure on the ends of the liquid sample (i.e., where the liquid sample and transport fluid meet). The liquid sample responds by moving within the fluid circuit to equalize the pressures.

One or more test zones can be spaced apart along the channel. Typically, each assay includes interaction of the probe compound with the respective analyte or with a respective complex including the analyte and a reagent (e.g., an optical label).

Location of the sample within the channel can be controlled by an actuator or roller configured to subject a portion of the compressible zone to a localized compressive force. The microfluidic device is translated relative to the actuator or roller so that the sample travels to a desired location within the channel. Alternatively, the roller can be moved while the device remains stationary.

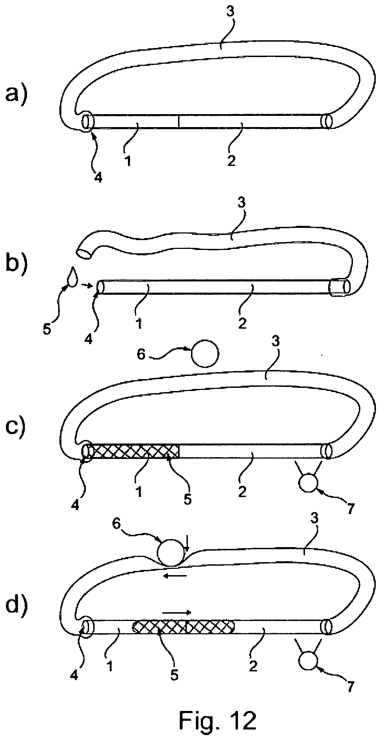

FIG. 12A illustrates fluid circuit 10 in a closed state. Fluid circuit 10 includes first zone 1, microfluidic channel 2, second zone 3, and inlet 4. First zone 1 may include a matrix or substance cake. In the closed state, second zone 3 is tightly connected to inlet 4. FIG. 12B shows fluid circuit 10 in an open state and ready to accept liquid sample 5 at inlet 4. After liquid sample 5 is contacted to inlet 4, capillary action draws liquid sample 5 into first zone 1. FIGS. 12C-12D shows the fluid circuit in a closed state after the sample has been applied. Roller 6 is positioned with respect to second zone 3 such that the second zone is either in an uncompressed state (as in FIG. 12C) or in a compressed state (as in FIG. 12D). The location of liquid sample 5 within fluid circuit 10 can be adjusted by positioning roller 6 such that second zone 3 is in a compressed state, and while maintaining the compressed state, moving roller 6 relative to second zone 3 (illustrated by arrows in FIG. 12D). Because the fluid circuit is closed, the movement of roller 6 creates a differential pressure on either side of the roller; the differential pressure induces movement of liquid sample, thereby restoring equal pressures. The fluid circuit can be configured to work in a cartridge. In certain examples, the fluid circuit can have a microfluidic flow path capable of compression through deformation, a microfluidic channel including a detection region, and a sealing member that can reversibly or irreversibly form a closed fluid circuit.

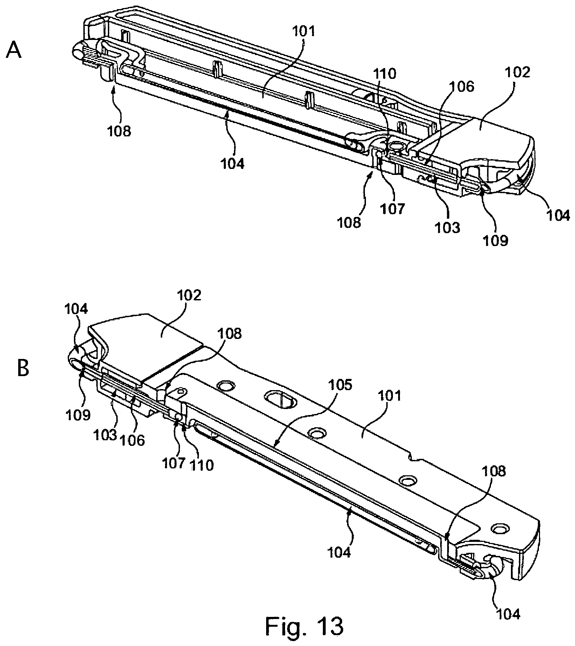

FIGS. 13A-13B show a cutaway views of an exemplary cartridge 100. Cartridge 100 includes substrate 101, cap 102, and a fluid circuit including first zone 103, conduits 108, channel 105, second zone 104, and inlet/tight connection 109. Channel 105 can be covered by an at least partially optically transmissible layer. First zone 103 can be e.g. a capillary, selected to hold a desired sample volume (e.g., 1 µL to 20 µL, 2 to 10 µL, or about 5 µL). The capillary can be coated with an anticoagulant on its inner surface. Inlet 109 of the capillary is configured to receive the sample 106. The exit of the capillary may open out to a reaction chamber 110 with a predetermined volume of, e.g., about 5 µL, 10 µL or 20 µL. Reaction chamber 110 may include a reagent pellet 107. The reagent pellet can include antibodies labelled with a fluorescent dye and having an affinity for antigens to be detected within the sample. For instance, for detecting the number of T-helper-cells in a liquid sample the reagent pellet can include an anti-CD4+-antibody labelled with a first fluorescent dye (such as phycoerythrine) and an anti-CD3+-antibody labelled with a second fluorescent dye such as (phycoerythrine-Cy5), salts and stabilizing reagents etc. The inner surface of the first zone may be covered with reagents necessary for processing the sample. An exemplary assay for detecting particles such as cells in a liquid sample is described in, for example, in WO 2007/051861. Conduit 108 in fluid communication with the reaction chamber 110 connects the reaction chamber with the first end of channel 105. As described in WO 2007/051861, detection can take place in the channel. Thus, the channel is at least partially optically transparent. For example, channel 105 can be covered by an at least partially optically transmissible layer. The second end of channel 105 is connected to a first end of second zone 104 via conduit 108. The second zone is at least partially flexible so that the inner diameter of the second zone can be reduced to zero. For example, the second zone can be an elastic silicone tube or the like. A second end of the second zone is mounted into a cap 102 which is adapted to be applied to the substrate and to support the second zone. By opening the cap, tight connection 109 between the first and the second zone is opened, by closing the cap, the tight connection 109 between the first and the second zone is closed.

In shipping condition the device can be closed, i.e., the second zone forms a tight connection with the first zone at connection 109. Alternatively, the device can be shipped in an open state. The device may include (e.g., for safety purposes) a mechanism configured to prevent the cartridge from becoming opened after it is first closed. Connection 109 is closed when a sealing member in cap 102 forms a fluid-tight connection with end of capillary 103. In operation, the user opens the cap, thereby opening the first zone on its first end. The user contacts the open end of the first zone with the sample liquid, e.g., a blood drop such as produced by a finger stick. Thus, capillary 103 fills with the sample. The user closes the cap thereby closing connection 109 between the first and the second zone. At this point, the fluid circuit includes a contiguous, predetermined volume of sample liquid, the reagent pellet, and a contiguous volume of transport fluid (e.g., air) within the reaction chamber, conduits, channel and second zone. The user puts the device into the machine designed for operating the device. The machine includes an actuator configured to compress the second zone, a detector, and a controller. The actuator compresses the second zone, reducing its diameter at the compression point to zero. When the device and the actuator are moved relative to each other while in a compressed state, the pressure in the transport fluid will increase on the one end of the sample volume while it will decrease on the other end of the sample volume. The sample volume will move within the fluid circuit until the pressure on each end of the sample volume is equal.

Channel 105 can be hydrophobic, such that the sample will not move into channel 105 without application of an external force. The walls in the vicinity of reagent pellet 107 can also be hydrophobic. When using hydrophilic materials the long-term stability of the reagent pellet can be worse compared to a hydrophobic material.

The actuator can be fixed within the machine and the device is moved relative to the means for compressing. As described in WO 2007/051861, the actuator is e.g. a roller.

The device can be moved within the machine such that the sample will move into the reaction chamber thereby dissolving the reagent pellet in this chamber. The antibodies will bind to the respective antigens present in the sample. Depending on the type of sample, antigens may be located on particles suspended in the sample liquid (e.g., on cell surfaces in a blood sample). Because the antibodies are labelled (e.g., with a fluorescent dye), once bound to their respective antigens, the antigens become labelled as well. See, e.g., WO 2007/051861. By further moving the device relative to the machine in the same direction the sample is moved into the channel. Once the channel is filled, detection takes place.

Desirably, the detector is small, inexpensive, and versatile; that is, it is adaptable to other applications than solely the use described here. The detector can be a fluorescence microscope, preferably one that has very small outer dimensions and a small height with respect to the cartridge. The detector can be capable of imaging objects with a size ≥ 5 µm and is configured to detect signals of the wavelength which are emitted by the fluorescent dyes used in the assay. The light source can be a high-power LED emitting light in a spectrum which is suitable to excite the fluorescent dyes used in the assay. If different dyes are used, e.g. at least two different dyes emitting light at two different wave lengths, detection should be possible at each of at least two different wavelengths. The detector can include a focus mechanism and a camera.

Desirably a detection unit as used herein is any optical, electronic or mechanical etc. system able to detect a form, size, brightness or any other parameter of an object or an image. A detection unit may comprise or consist of, for instance, a scanning unit or scanning system or a part thereof, e.g. as mentioned herein above.

Usually, very strong light sources are used for fluorescence microscopy, because to have almost parallel light beams, only a small portion of the emitted light is used (solid angle ∼2°). By using a condenser lens and detector lens that collects a greater portion of light emitted from the source, a less powerful source (e.g., an LED) can be used. Fluorescence microscopy traditionally places a very high value on optical fidelity; as such, the field has taught away from high solid angles for condenser lenses. Indeed, the field has tended to teach relatively heavy, bulky, and complex optical systems for achieving high optical fidelity.

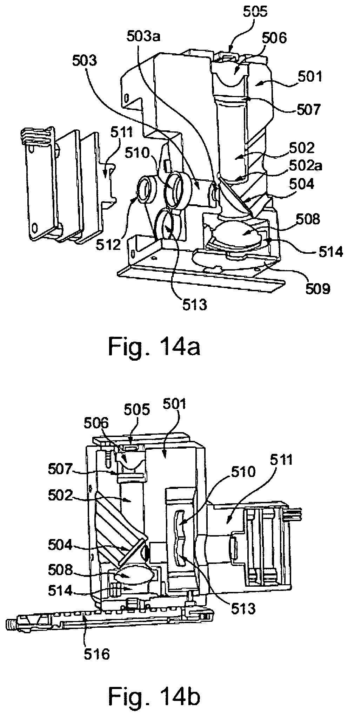

With reference to FIG. 14, an exemplary detector 500 includes a main body 501 which includes a first optical path 502 and a second optical path 503. In certain examples, each of the optical paths, independently, can have a generally cylindrical shape or other suitable configuration. First optical path 502 represents the excitation optical path; second optical 503 represents the detection optical path.

First optical path 502 connects light source 505 with cartridge 516. Light source 505 can be a high power LED (such as a Platinum Dragon® LED (Osram)) with emission wavelengths of 455 nm, 470 nm and 528 nm and a viewing angle of 120° (Lambertian emitter). When using fluorescent dyes the light source is selected according to the excitation wavelength of the fluorescent dyes which are used in the assay. E.g., when using phycoerythrine and phycoerythrine-Cy5 the light source is selected to emit light with a wavelength of around 520 nm while for the use of phycoerythrine and PerCP the light source is selected to emit light around 480 nm. Condenser lens 506 (e.g., made from topaz, refraction index 1.533) condenses the light emitted by the LED into the first optical path 502. Aperture 502a is configured to allow a maximum solid angle of 13.5° or less to illuminate dichroic mirror 504. Optical path 502 also includes a band pass filter 507 (excitation filter), allowing light with a wavelength between 505 nm and 530 nm to pass. Thus, the remaining excitation wavelength would be around 528 nm.

Optical path 503 connects the CMOS camera with the object 516 via dichroic mirror 504 and is configured at an angle (shown as 90° in FIG. 14) relative to optical path 502. Optical path 503 also includes a first emission filter 510Filter 510 may be mounted to a filter changer 512. Filter changer 512 may include additional emission filter(s), e.g. a filter 513. Emission filters 510 and 513 can be chosen with regard to a predetermined set of emission wavelengths, e.g., the emission wavelengths of the fluorescent dye(s) used for labelling reagents in the cartridge. For example, filters 510 and 513 may be selected to pass light with wavelengths of 590 nm and 685 nm, respectively, corresponding to the emission wavelengths of phycoerythrine and phycoerythrine-Cy5. Optical path 503 includes an aperture 503a configured to allow a maximum solid angle of 13.5° on dichroic mirror 504.

Dichroic mirror 504 is configured to separate detection optical path 503 from excitation optical path 502. Optionally, it is a short pass dichroic mirror allowing light with a wavelength <= 568 nm to pass while light with a wavelength > 568 nm is reflected. Thus, dichroic mirror 504 allows the light from the excitation optical path to pass while the light from the object 516 is reflected into the detection optical path. Again, physical properties of dichroic mirror 504 are selected according to the labels (e.g., the fluorescent dyes) which are used in the assay.

The detector may further include a focusing mechanism 514 allowing varying the distance of detection lens 508 and object continuously by 5 mm or less, e.g. by 1 or 2 mm.

Detection lens 508 may be configured to have a detection optical aperture of 0.4 or less, e.g. 0.2 and a excitation optical aperture of 0.5 or less, e.g. 0.4.

The detector also may include a digital imaging device such as an 8-bit grey value CMOS camera with a resolution of e.g. 640x480 pixels. Alternatively, the digital imaging device may have a higher resolution and/or may be a colour CMOS camera.

The reproduction scale of the detection system may be between 1:1 and 1:10, e.g. 1:3, 1:4 or 1:5.

The distance between the object 516 and the detection lens 508 may be between 2 mm and 20 mm, e.g. 8 mm, 9 mm or 10 mm.

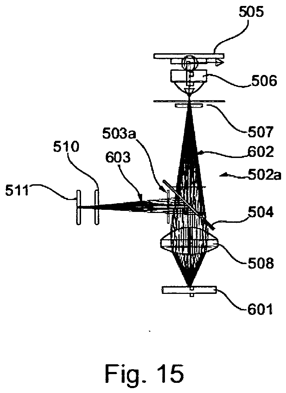

With reference to FIG. 15, in operation the light emitted from the light source 505 is condensed via lens 506 and filtered via excitation filter 507. It passes aperture 502a, dichroic mirror 504, detection lens 508, aperture 509 and excites the object 601. The object 516 may be the channel filled with the sample liquid, e.g. blood, the liquid including a number of particles, e.g. T-helper cells to be detected. The particles may be labelled with one or more fluorescent dye coupled antibodies. Alternatively, the object may be a channel including target molecules labelled with one or more fluorescent dyes and bound to probe molecules or an array of probe molecules immobilized on one of the channel's surfaces. The dyes fluoresce under the influence of the excitation light from the LED. The light emitted from the fluorescent dyes passes aperture 509, detection lens 508 and is reflected via dichroic mirror 504 into the detection optical path 503. There it passes detection filter 510 (or 513, depending of the position of filter changer 512) adapted to allow the passage of light of a wavelength of the light emitted from the fluorescent dye. After the light has passed the filter, it is collected by the CMOS chip of the attached CMOS camera 511.

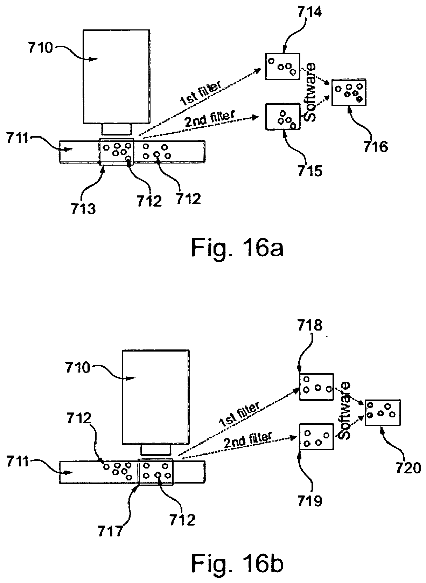

FIGS. 16A-16B illustrates how the detector can be used for detecting, e.g. the number of T-helper cells present in a blood sample. Details for the device and the reaction can be found above and in WO 2007/051861. In the example discussed, the cartridge is prepared with two labelled antibodies: phycoerythrine-labelled anti CD4 antibodies and phycoerythrine-Cy5-labelled anti-CD3 antibodies. Since T-helper cells show both antigens on their surface, T-helper cells will be labelled with both fluorescent dyes. Other cells, showing only one of the both antigens on their surfaces, may be also present in the sample. These cells will be labelled only with one of the corresponding fluorescent dyes.

After reaction with the respective fluorescent dye labelled antibodies, the liquid sample comprising fluorescing cells 712 is moved into the detection channel 711. At a first position (FIG. 16A) the detector 710 detects a first image 714 representing a view on a portion 713 of channel 711. Portion 713 represents a predetermined volume of the sample, e.g. 100 nL. Image 714 is taken with a first filter which is configured to allow light emitted by phycoerythrine-labelled anti CD4+ antibodies present in the sample and to block light emitted by phycoerythrine-Cy5-anti-CD3+ antibodies. A second image 715 of the same position is taken using a second filter which is configured to allow phycoerythrine-Cy5-anti-CD3+ antibodies and to block light emitted by phycoerythrine-labelled anti CD4+. Images 714 and 715 may show a different number of signals within portion 713. Additionally, due to aberrations in the optical system, both images 714 and 715 might be out of alignment relative to each other.

Software (e.g. Iconoclust by Clondiag) can be used to align both images 714 and 715, e.g. by using alignment marks in the channel (not shown) or by analyzing the relationships between signals which are present in both of the pictures. Additionally, the software identifies and marks the signals which have been detected in both pictures (716). In FIG. 16A, three signals were identified to be present in both figures. That means that 3 cells with both antigens were found in portion 713. The results may be displayed, used for further calculations or statistics or may be stored for further processing.

Detector 710 and channel 711 are moved relative to each other to view another portion 717 of channel 711 (FIG. 16B) and the detection procedure is repeated. Images 718 and 719 are recorded, using the first and second filters respectively. The software identifies and marks the signals which have been detected in both pictures (720).

Detection may be repeated in the additional portions of the detection channel, resulting in a set of values representing the number of cells in each of the portions. The number of cells present in the sample, as well as corresponding statistical parameters may be calculated from this set of values. For example, an average of three cells per 100 nL corresponds to a total amount of 150 cells in a sample volume of 5 µL.

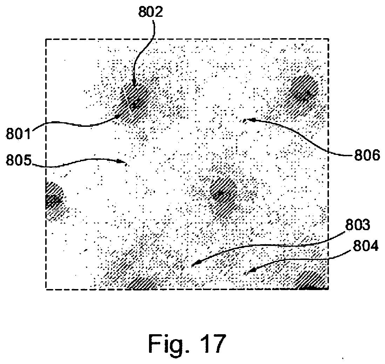

FIG. 17 shows an overlay of two images detected during a T-cell counting experiment using blood as liquid sample. Both images are detected at the same location of the channel (e.g. like images 714 and 715 in fig. 5) using two different detection filters. 801 and 802 represent one alignment mark imaged using two different detection filters. The dislocation between both images can clearly be detected and corrected by using the marks. 803 and 804 represent a single cell which is dislocated by the same distance like the alignment marks 801 and 802. Since this cell is present in both of the images, it can be determined that this cell is labelled with both antibodies and thus is a T-helper-cell. 805 represents a cell which is only detectable in one of the both images of the overlay. Thus it can be derived that this cell does not show both antigens on its surface and therefore is not a T-helper-cell. Other blood cells can also be seen in the images. Since they are not labelled with any fluorescent antibodies, they only can be seen as a shadow (806).

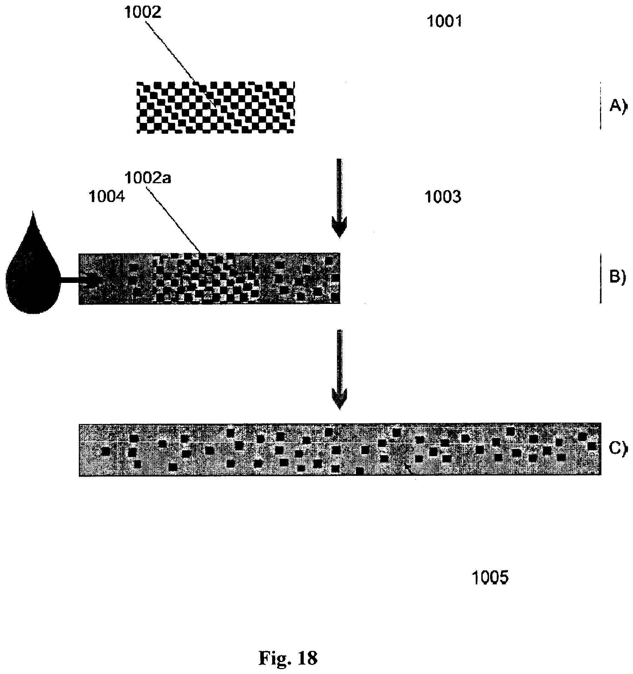

FIG. 18 shows a capillary 1001 including a matrix or substance cake 1002, e.g. a lyophilisate. The matrix 1002 includes various substances such as coagulation inhibitors, stabilizing reagents and labeled antibodies etc. The matrix may fill the complete diameter of the cartridge. Alternatively, the matrix may fill only a part of the length of the capillary. The structure of the matrix may allow a liquid to soak into the pellet- or cake-like matrix.

As can be seen in Fig.18B, when a sample 1004 is applied to the capillary it will move into it driven by capillary forces. When the sample 1004 flows through the matrix, the matrix may be dissolved (1002a) and the reagents 1003 are diluted within the sample. Dissolving the matrix is supported by the moving sample itself; the sample is soaked through the matrix into the capillary by capillary forces thereby creating a fluid flow acting on the matrix. Thus, dissolving the pellet is not only controlled by diffusion. Finally, when the capillary is filled with the sample (see Fig. 18C), the matrix may already be more or less completely dissolved. Small remains of the pellet may be dissolved now by diffusion controlled processes.

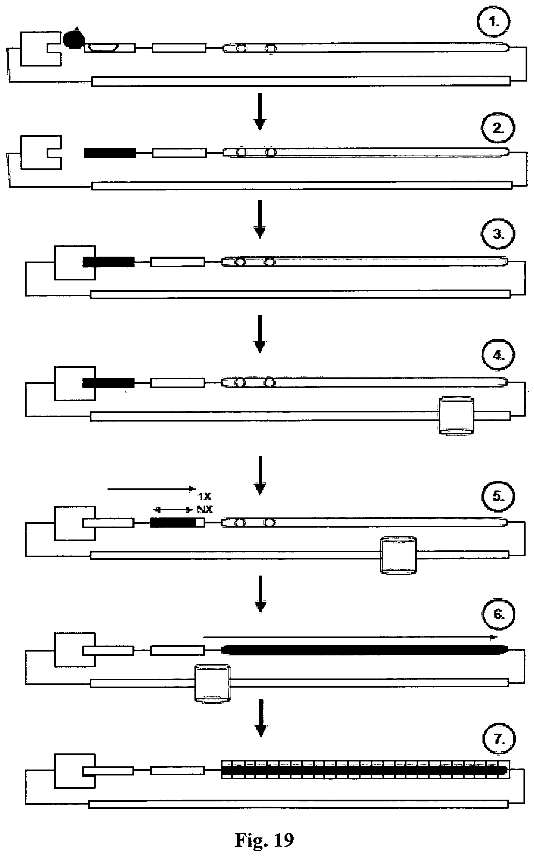

FIG. 19 shows an exemplary workflow in a device or cartridge. The cartridge may contain a sample port with an end-to-end capillary (to contain, e.g. 5 µl of sample) that contains dried reagents as described herein needed to perform the test. The sample is first applied to the capillary end of the cartridge (1). The sample is drawn into the end-to-end capillary by capillary force (2). The reagents provided in the capillary are re-suspended in the sample. The cartridge may have a snap-tight attached cap. After applying the sample, the cap is closed, and the cartridge is placed into the system (3). This may eliminate carryover. Complete filling of end-to-end capillary can be assessed visually, through a small window on the cartridge. The user can thus assess if sufficient sample has been taken up by the capillary before the test process has been initialized on the system. After loading the test cartridge onto the system filling is checked by the system by means of a reflectance measurement window. A roller that is part of the device or system is brought into contact with the cartridge tubing or microfluidic channel (4). The cartridge is moved along the roller. The microfluidic channel is part of a closed fluid circle or flow path. Thus, the cartridge and the roller may make up a peristaltic pump that is used to actively move the sample within the cartridge (5). The sample is first moved into a reaction containment and then repeatedly back and forth to support proper mixing of the reagent and binding of antibodies to the respective antigens. After a pre-defined incubation time the stained sample is moved into the detection containment or region and the analytes, e.g., cells, are allowed to settle for defined period of time (6). The detection channel is scanned along a fluorescence optics module and images are collected at two different wavelengths all along the channel (7).

A device or system as described above may comprise a ventilation opening or opening configured to vent the microfluidic channel. Such a ventilation opening may be located between the detection region and a second end of the inlet region, e.g. a capillary inlet, which is adapted for receiving the sample. For example, the second end may be the end opposite to a first end adapted for receiving the sample. The opening may provide a fluid connection of the second end of the capillary inlet with the ambient air. Further, the capillary inlet adapted for receiving the sample may be arranged in such a manner that a movement of the capillary inlet within the microfluidic channel will allow closing the ventilation opening. The opening may be, for instance, a hole reaching through a wall of the microfluidic channel and connecting the inner end of the capillary adapted for receiving the sample with the ambient air.

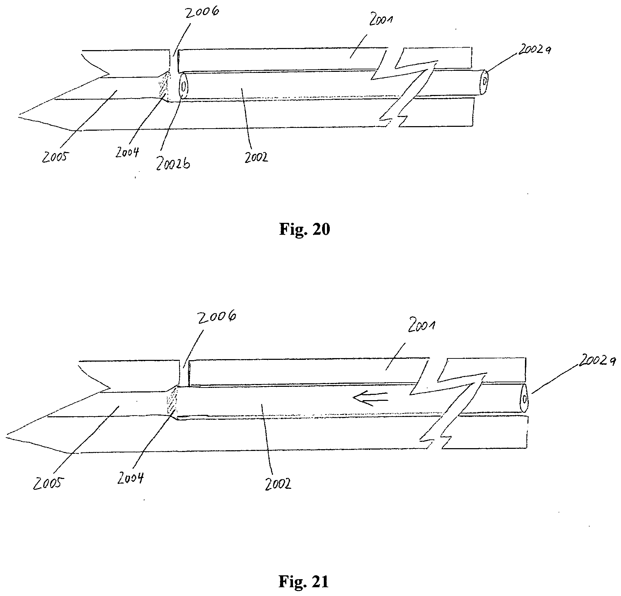

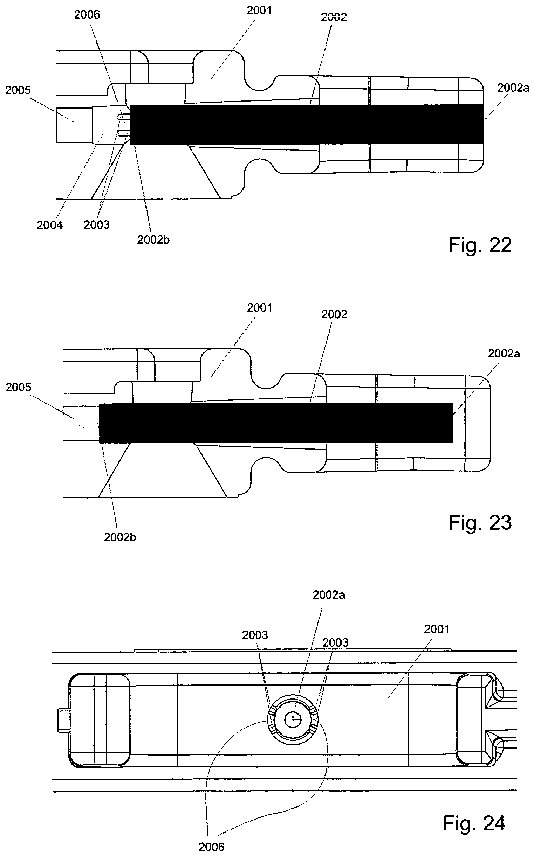

FIGS. 20 and 21 show exemplary ventilation openings in an open (FIG. 20) and a closed (FIG. 21) state. Here, capillary inlet 2002 is mounted into cartridge 2001 such, that the first end 2002a of capillary inlet can be brought in contact with a sample (not shown) and the second end 2002b is in fluid communication with the ambient air surrounding the cartridge 2001 via opening 2006 and with channel 2005 via structure 2004. Structure 2004 may be adapted to form a tight connection between the second end 2002b of capillary inlet 2002 and channel 2005, which may lead to other compartments of the cartridge such as the detection region. After loading the sample into the capillary inlet, the capillary inlet 2002 may be moved until it contacts structure 2004 (see fig. 22). By this movement, opening 2006 is closed and the sample can flow into channel 2005.

FIGS. 22-24 show detailed views of an exemplary capillary inlet adapted for receiving the sample of a device as described above. The cartridge 2001 may comprise one or more, e.g. three means 2003 for supporting the capillary inlet 2002. Such means may be mounted into or may be part of cartridge 2001. The means 2003 for supporting the capillary inlet 2002 allow a positioning of the capillary inlet within the substrate as well as a movement of the capillary inlet within the substrate. The means 2003 for supporting the capillary inlet may guide the capillary inlet over the whole area where the capillary inlet is mounted into the substrate or support the capillary inlet only punctually.

As illustrated in FIG. 22, in a first state, the capillary inlet 2002 for receiving the sample is in a first position and supported by means 2003 for supporting the capillary inlet within substrate 2001. For instance, means 2003 for supporting the capillary inlet are bars which allow positioning and movement of the capillary inlet 2002 within substrate 2001. Bars 2003 may be separated from each other by gaps or openings 2006 which extend along the bars and connect structure 2004 with the ambient air. Structure 2004 allows forming a close connection with the second end 2002b of the capillary inlet 2002 and channel 2005 leading to the detection region of the micro fluidic channel.

Structure 2004 may be a hole having an inner diameter, wherein the inner diameter is substantially equal to the outer diameter of the capillary inlet.

Further, structure 2004 may be a conical hole having a first and a second diameter. The first diameter may be adapted to form a hopper for the second end of the capillary inlet and may be substantially equal or bigger than the outer diameter of the capillary inlet; the second diameter may be adapted to form a close connection with channel 2005 and may be equal or smaller than the outer diameter of the capillary inlet.

In the first position, capillary inlet 2002 is not in contact with structure 2004. Therefore, air may be displaced directly from the capillary inlet to the ambient air via the gaps or openings 2006 between the bars 2003, for instance by filling the capillary inlet with the sample.

In FIG. 23, capillary inlet 2002 for receiving the sample is in a second position. A close connection between the capillary inlet 2002 and channel 2005 may be formed via structure 2004. The connection can be closed, for instance, by moving the capillary inlet 2002 on bars 2003 toward channel 2005. The movement can be initiated or caused by applying an external force on the first end 2002a of capillary inlet 2002. The external force can be applied, for instance, manually, automatically in a device operating the cartridge or when closing a cap of the cartridge.

FIG. 24 shows a top view on the first end 2002a of capillary inlet 2002. In addition, means 2003 for supporting the capillary inlet 2002 and gaps or openings 2006 are shown.

## Claims

1. A method comprising:
labeling particles immobilized in the microfluidic channel of a device or system with a fluorescent label; wherein said particle is a eukaryotic cell, a bacterium, a virus, a virus-like particle or a bead showing an antigen;
obtaining a first image comprising at least a subset of the immobilized particles labeled with the fluorescent label;
determining a first value indicative for the number of particles in the first image;
obtaining a further image of the subset of immobilized particles labeled with the fluorescent label after an interim;
determining a further value indicative for the number of particles in the further image; and
determining a third value indicative for i) the activity and/or quality of the fluorescent label and/or ii) the quality of an interaction between a particle and a fluorescent label and/or iii) the usability of the device or system and/or of any procedure, function or method carried out with or in said device or system and/or iv) the accuracy of a test result obtained by using said device or system, based on a comparison of the first value and the further value;
wherein an increase of the further value with respect to the first value of at least 10% leads to the test results being considered as usable,
wherein an increase of the further value with respect to the first value of less than 10% leads to a disregard of the test results.

2. The method of claim 1, wherein the steps of obtaining a further image and determining a further value are repeated at least 2, 3, 5, 10 or n times and wherein determining one or more third values is based on a comparison of the first and one or more of the further values.

3. The method of claim 1 or 2, wherein an increase of the further value with respect to the first value of at least 20% leads to the test results being considered as usable and wherein an increase of the further value with respect to the first value of less than 20% leads to a disregard of the test results.

4. The method of any one of claims 1 to 3, wherein an increase of the further value with respect to the first value of at least 30% leads to the test results being considered as usable and wherein an increase of the further value with respect to the first value of less than 30% leads to a disregard of the test results.

5. The method of any one of claims 1 to 4, wherein the eukaryotic cell is a T helper cell.

6. The method of any one of claims 1 to 5, wherein said fluorescent label is a dye, a ligand or an antibody that is fluorescent or conjugated to a fluorescent material.

7. The method of any one of claims 1 to 6, wherein said interim between a first and a further image is from 10 sec to 30 min, from 1 min to 15 min, from 5 min to 10 min, or 7 min.

8. The method of any one of claims 1 to 7, wherein the method further comprises:
introducing a liquid sample into a microfluidic channel disposed within a microfluidic network, device or system, wherein the microfluidic channel comprises the liquid sample comprising multiple particles, and wherein said microfluidic channel comprises and/or is associated with a control element;
forming a mixture comprising at least a portion of the liquid sample and a fluorescent label;
forming multiple complexes, each complex comprising one of the multiple particles and at least one of the fluorescent labels;
detecting complexes present within a subset of the mixture.

9. The method of claim 8, wherein the step of detecting complexes allows a detection and/or diagnosis and/or conclusion on the status of a retroviral infection.

10. The method of claim 9, wherein said retroviral infection is an infection with HIV.

11. The method of any of claims 1 to 10, wherein labeling comprises:
contacting the particles immobilized within the microfluidic channel with the fluorescent label configured to bind the particles;
forming complexes, each of the complexes comprising the fluorescent label and a particle immobilized within the microfluidic channel.

## Patentansprüche

1. Verfahren umfassend:
Markieren von Partikeln, die in dem mikrofluidischen Kanal eines Geräts oder Systems immobilisiert sind, mit einem fluoreszierenden Marker, wobei die Partikel eine eukaryotische Zelle, ein Bakterium, ein Virus, ein Virus-ähnlicher Partikel oder ein Kügelchen, das ein Antigen präsentiert, ist;
Erhalten eines ersten Bildes umfassend wenigstens eine Untergruppe der immobilisierten Partikel, die mit dem fluoreszierenden Marker markiert sind;
Bestimmen eines ersten Werts, der indikativ für die Anzahl von Partikeln in dem ersten Bild ist;
Erhalten eines weiteren Bildes der Untergruppe von immobilisierten Partikeln, die mit dem fluoreszierenden Marker markiert sind, nach einer Zwischenzeit;
Bestimmen eines weiteren Werts, der indikativ für die Anzahl von Partikeln in dem weiteren Bild ist; und
Bestimmen eines dritten Werts, der indikativ für
i) die Aktivität und/oder Qualität des fluoreszierenden Markers und/oder
ii) die Qualität einer Interaktion zwischen einem Partikel und einem fluoreszierenden Marker und/oder
iii) die Nutzbarkeit des Geräts oder Systems und/oder jeglichem Vorgang, Funktion oder Verfahren, die mit oder in dem Gerät oder System ausgeführt wird, und/oder
iv) die Genauigkeit eines Testergebnisses, das durch die Verwendung des Geräts oder Systems basierend auf einem Vergleich des ersten Werts und des weiteren Werts, erhalten wird;
wobei eine Erhöhung des weiteren Werts im Vergleich zu dem ersten Wert von wenigstens 10% dazu führt, dass die Testergebnisse als verwendbar angesehen werden,
wobei eine Erhöhung des weiteren Werts im Vergleich zu auf dem ersten Wert von weniger als 10% dazu führt, dass die Testergebnisse verworfen werden.

2. Verfahren gemäß Anspruch 1, wobei die Schritte des Erhaltens eines weiteren Bildes und Bestimmen eines weiteren Wertes wenigstens 2-, 3-, 5-, 10- oder n-mal wiederholt werden und wobei das Bestimmen eines oder mehrerer dritter Werte auf einem Vergleich von dem ersten und einem oder mehreren der weiteren Werte basiert.

3. Verfahren gemäß Anspruch 1 oder 2, wobei eine Erhöhung des weiteren Werts im Vergleich zu dem ersten Wert von wenigstens 20% dazu führt, dass die Testergebnisse als verwendbar angesehen werden und wobei eine Erhöhung des weiteren Werts im Vergleich zu dem ersten Wert von weniger als 20% dazu führt, dass die Testergebnisse verworfen werden.

4. Verfahren gemäß Anspruch 1 bis 3, wobei eine Erhöhung des weiteren Werts im Vergleich zu dem ersten Wert von wenigstens 30% dazu führt, dass die Testergebnisse als verwendbar angesehen werden und wobei eine Erhöhung des weiteren Werts im Vergleich zu dem ersten Wert von weniger als 30% dazu führt, dass die Testergebnisse verworfen werden.

5. Verfahren gemäß einem der Ansprüche 1 bis 4, wobei die eukaryotische Zelle eine T-Helferzelle ist.

6. Verfahren gemäß einem der Ansprüche 1 bis 5, wobei der fluoreszierende Marker ein Farbstoff, ein Ligand oder ein Antikörper, der fluoreszierend oder an ein fluoreszierendes Material konjugiert ist, ist.

7. Verfahren gemäß einem der Ansprüche 1 bis 6, wobei die Zwischenzeit zwischen einem ersten und einem weiteren Bild von 10 s bis 30 min, von 1 min bis 15 min, von 5 min bis 10 min oder 7 min ist.

8. Verfahren gemäß einem der Ansprüche 1 bis 7, wobei das Verfahren ferner umfasst:
Einführen einer flüssigen Probe in einen mikrofluidischen Kanal, der in eine mikrofluidischen Netzwerk, Gerät oder System angeordnet ist, wobei der mikrofluidische Kanal die flüssige Probe, die multiple Partikel umfasst, umfasst und wobei der mikrofluidische Kanal ein Kontrollelement umfasst und/oder mit einem Kontrollelement assoziiert ist,
Bilden einer Mischung umfassend wenigstens einen Teil der flüssigen Probe und eines fluoreszierenden Markers;
Bilden multipler Komplexe, wobei jeder Komplex einen der multiplen Partikel und wenigstens einen der fluoreszierenden Marker umfasst;
Detektieren von Komplexen, die innerhalb einer Untergruppe der Mixtur vorliegen.

9. Verfahren gemäß Anspruch 8, wobei der Schritt des Detektierens von Komplexen eine Detektion und/oder Diagnose und/oder Rückschluss über den Status einer retroviralen Infektion erlaubt.

10. Verfahren gemäß Anspruch 9, wobei die retrovirale Infektion eine Infektion mit HIV ist.

11. Verfahren gemäß einem der Ansprüche 1 bis 10, wobei das Markieren umfasst:
Inkontaktbringen der Partikel, die innerhalb des mikrofluidischen Kanals immobilisiert sind, mit dem fluoreszierenden Marker, der konfiguriert ist, die Partikel zu binden;
Bilden von Komplexen, wobei jeder der Komplexe den fluoreszierenden Marker und ein Partikel, das innerhalb des mikrofluidischen Kanals immobilisiert ist, umfasst.

## Revendications

1. Procédé comprenant :
le marquage de particules immobilisées dans le canal micro fluidique d'un dispositif ou système au moyen d'un marqueur fluorescent ; sachant que ladite particule est une cellule eucaryote, une bactérie, un virus, une particule similaire à un virus ou une bille présentant un antigène ;
l'obtention d'une première image comprenant au moins un sous-ensemble des particules immobilisées marquées au moyen du marqueur fluorescent ;
la détermination d'une première valeur indiquant le nombre de particules dans la première image ;
l'obtention d'une image supplémentaire du sous-ensemble de particules immobilisées marquées au moyen du marqueur fluorescent après un temps intérimaire ;
la détermination d'une valeur supplémentaire indiquant le nombre de particules dans l'image supplémentaire ; et
la détermination d'une troisième valeur indiquant
i) l'activité et/ou la qualité du marqueur fluorescent et/ou
ii) la qualité d'une interaction entre une particule et un marqueur fluorescent et/ou
iii) l'utilisabilité du dispositif ou système et/ou de toute procédure, fonction ou procédé effectués avec ou dans ledit dispositif ou système et/ou
iv) la précision d'un résultat de test obtenu au moyen dudit dispositif ou système, sur la base d'une comparaison de la première valeur et de la valeur supplémentaire ;
sachant qu'en cas d'augmentation d'au moins 10% de la valeur supplémentaire par rapport à la première valeur, les résultats de test sont considérés utilisables,
sachant qu'en cas d'augmentation de moins de 10% de la valeur supplémentaire par rapport à la première valeur, les résultats de test sont rejetés.

2. Le procédé de la revendication 1, sachant que les étapes d'obtention d'une image supplémentaire et de détermination d'une valeur supplémentaire sont répétées au moins 2, 3, 5, 10 ou n fois et sachant que la détermination d'une ou plusieurs troisièmes valeurs est basée sur une comparaison de la première et d'une ou plusieurs des valeurs supplémentaires.

3. Le procédé de la revendication 1 ou 2, sachant qu'en cas d'augmentation d'au moins 20% de la valeur supplémentaire par rapport à la première valeur, les résultats de test sont considérés utilisables, et sachant qu'en cas d'augmentation de moins de 20% de la valeur supplémentaire par rapport à la première valeur, les résultats de test sont rejetés.

4. Le procédé de l'une quelconque des revendications 1 à 3, sachant qu'en cas d'augmentation d'au moins 30% de la valeur supplémentaire par rapport à la première valeur, les résultats de test sont considérés utilisables, et sachant qu'en cas d'augmentation de moins de 30% de la valeur supplémentaire par rapport à la première valeur, les résultats de test sont rejetés.

5. Le procédé de l'une quelconque des revendications 1 à 4, sachant que la cellule eucaryote est une cellule T auxiliaire.

6. Le procédé de l'une quelconque des revendications 1 à 5, sachant que ledit marqueur fluorescent est une teinture, un ligand ou un anticorps qui est fluorescent ou conjugué à une matière fluorescente.

7. Le procédé de l'une quelconque des revendications 1 à 6, sachant que ledit temps intérimaire entre une première image et une image supplémentaire est compris entre 10 s et 30 mn, 1 mn et 15 mn, 5 mn et 10 mn, ou est de 7 mn.

8. Le procédé de l'une quelconque des revendications 1 à 7, sachant que le procédé comprend en outre :
l'introduction d'un échantillon liquide dans un canal microfluidique disposé à l'intérieur d'un réseau, dispositif ou système microfluidique, sachant que le canal micro fluidique comprend l'échantillon liquide comprenant des particules multiples, et sachant que ledit canal microfluidique comprend et/ou est associé à un élément de régulation ;
la formation d'un mélange comprenant au moins une partie de l'échantillon liquide et un marqueur fluorescent ;
la formation de complexes multiples, chaque complexe comprenant une des particules multiples et au moins un des marqueurs fluorescents ;
la détection de complexes présents à l'intérieur d'un sous-ensemble du mélange.

9. Le procédé de la revendication 8, sachant que l'étape de détection de complexes permet une détection et/ou un diagnostic et/ou une conclusion sur l'état d'une infection rétrovirale.

10. Le procédé de la revendication 9, sachant que ladite infection rétrovirale est une infection par HIV.

11. Le procédé de l'une quelconque des revendications 1 à 10, sachant que le marquage comprend :
la mise en contact des particules immobilisées à l'intérieur du canal microfluidique avec le marqueur fluorescent configuré pour lier les particules ;
la formation de complexes, chacun des complexes comprenant le marqueur fluorescent et une particule immobilisée à l'intérieur du canal microfluidique.
